# EUROPEAN PATENT APPLICATION

(11) **EP 4 722 091 A1**
(43) Date of publication of application: **08.04.2026**
(21) Application number: 23940557.4
(22) Date of filing: 05.06.2023
(51) Int. Cl.: B62K 21/00

(54) **METHOD OF MODELING TWO-WHEELER STABLE TRAVEL CONTROL SYSTEM, TWO-WHEELER STABLE TRAVEL SIMULATOR, PROGRAM, TWO-WHEELER STABLE TRAVEL CONTROL SYSTEM, AND TWO-WHEELER STABLE TRAVEL CONTROL DEVICE**

(71) Applicant: Astemo, Ltd., Chiyoda-ku, Tokyo 1000004 (JP)
(72) Inventor: GOYAL, Aman, Hitachinaka-shi, Ibaraki 312-8503 (JP); TSUKAHARA, Hajime, Hitachinaka-shi, Ibaraki 312-8503 (JP)
(74) Representative: Nordmeyer, Philipp Werner
(86) International application number: PCT/JP2023/020767
(87) International publication number: WO 2024/252449

(57) **Abstract**

A method of modeling a two-wheeler stable travel control system includes a first step (S1) of acquiring a vehicle model obtained by modeling a two-wheeler into a model having a center of gravity (2f) of a front vehicle body, a center of gravity (2r) of a rear vehicle body, a center of gravity (1f) of a front tire including a front suspension, and a center of gravity (1r) of a rear tire including a rear suspension; a second step (S2, S3) of creating a linear equation of motion for the vehicle model (MDL); a third step (S4) of converting the linear equation of motion into a state equation; a fourth step (S5, S6) of acquiring, by analysis based on a root trajectory of the state equation, a feedback gain allowing stable travel of the vehicle model; and a fifth step (S7) of creating a model (180) of the two-wheeler stable travel control system that performs negative feedback control using the feedback gain obtained in the fourth step.

## Description

### TECHNICAL FIELD

The present invention relates to a method of modeling a two-wheeler stable travel control system, a two-wheeler stable travel simulator, a program, a two-wheeler stable travel control system, a two-wheeler stable travel control device, and the like.

### BACKGROUND ART

In the conventional art, as for four-wheelers, stable travel control based on power steering has been considered for two-wheelers. In the following description, the two-wheeler may include not only a motorcycle but also an electrically assisted bicycle.

In the following description, the term power steering is also used for the two-wheelers, as for the four-wheelers.

The stable travel control of the two-wheeler also includes so-called autonomous driving, in which traveling disturbance due to various disturbances is autonomously prevented to enable stable travel. In the present description, the stable travel control of the two-wheeler in which the traveling disturbance is autonomously prevented may be referred to as autonomous stable travel control or simply as autonomous driving control.

In a case of analyzing motion of the two-wheeler, a degree of freedom to be considered is higher than that of the four-wheeler, and an influence of a posture of an occupant, that is, a rider, or a handle operation is larger than that of the four-wheeler, and thus it is said that the discussion about autonomous driving of the two-wheeler is lagging behind those for the four-wheeler.

However, with the progress of autonomous driving techniques in the four-wheeler in recent years, autonomous driving of the two-wheeler has also been increasingly discussed. Further, for example, future needs such as using an autonomously driving two-wheeler for daily shopping or the like, and patrolling tourist spots by an autonomously driving two-wheeler can also be assumed.

Conventional techniques for stable travel assistance control or the autonomous stable travel control of the two-wheeler are, for example, the following.

Patent Literature 1 discloses that, in order to provide a motorcycle that enables stable automatic traveling along a traveling road without wobbling, a steering amount of a wheel based on a steering unit and a swing amount of the wheel based on a swing unit are controlled based on target values of a yaw motion amount and a roll motion amount of the motorcycle.

Patent Literature 2 discloses a control target model including a control system in which, in order to control a posture of a two-wheeler, a gyro actuator is disposed integrally with a target object, and a posture of the target object is controlled to a stable state by applying a torque to the target object whose posture is inclined by an operation of the gyro actuator.

Patent Literature 3 discloses a fall-over prevention device in which a bicycle robot is mounted on an actual two-wheeler, and fall-over of the two-wheeler is prevented by an operation of the bicycle robot.

Patent Literature 4 discloses a two-wheeler steering assistance system in which an actuator capable of applying a steering torque to a two-wheeler is provided, and traveling of the two-wheeler is assisted by a power steering operation similar to that of a four-wheeler.

Patent Literature 5 discloses a configuration in which, in order to improve stability of a posture of a vehicle body when a vehicle is stopped and to allow a driver to easily operate the posture of the vehicle body when the vehicle travels at a high speed, a moving object is provided with a steering actuator that generates a driving force for steering a front wheel and a trail length changing actuator that generates a driving force for changing a trail length of the front wheel.

Patent Literature 6 discloses that, for a purpose of travel assistance of a leanable vehicle, that is, a tiltable two-wheeler, a system for improving a driving performance of a vehicle including a state estimator that estimates a motion state of the vehicle and a dynamic vehicle model module that receives external data indicating the motion state is constructed.

Patent Literature 7 discloses a motion control method for a four-wheeler using a state equation. In claim 5 and Fig. 5 of Patent Literature 7, it is shown that a feedback gain, which is a function of a vehicle speed, is obtained using the state equation.

A system and a method of simulating multi-body system motion using a principle of virtual power and Hamilton's equation of motion are described in Patent Literature 8.

Further, a device for deriving an equation of motion of a multi-rigid-body system motion and a method of deriving the equation of motion of the multi-rigid-body system using a principle of virtual power and the Kane's equation of motion are described in, for example, Patent Literature 9.

### PRIOR ART

### PATENT LITERATURE

Patent Literature 1: JP2004-338507A
Patent Literature 2: JP2015-158390A
Patent Literature 3: JP4605227B
Patent Literature 4: JP2013-60187A
Patent Literature 5: JP6081238B
Patent Literature 6: JP2019-119447A
Patent Literature 7: JPS63-312271A
Patent Literature 8: WO2006/012709
Patent Literature 9: JP2014-078090A

### SUMMARY OF INVENTION

### PROBLEM TO BE SOLVED BY THE INVENTION

In the present invention, various studies have been made on autonomous stable travel control of a two-wheeler that is based on power steering.

In the following description, as a method of the power steering, for example, a technique is assumed in which a steering torque is applied to at least one of a handle and a rotation shaft that rotates the handle, in other words, a steering shaft by a torsion bar actuator or the like. Here, although a handle angle, a steering angle, and the like have different names, these are common in a broad sense in being steering angles related to steering of the two-wheeler.

For example, when a two-wheeler on which a rider is riding is traveling in a straight line, the handle actually swings in small movements. Here, in a case where a balance of an entire vehicle body is established and the entire vehicle body and a front wheel system have the same roll angle, if a fluctuation of the steering torque caused by disturbances can be eliminated by controlling the steering torque based on the power steering, an inertia moment and a steering force applied to the handle by the rider are balanced with respect to the steering shaft, and the rider can obtain a feeling of autonomous driving.

Therefore, it is considered that the two-wheeler can perform autonomous stable travel without falling over by establishing an appropriate power steering technique.

Here, it is preferable that the autonomous stable travel control technique of the two-wheeler is widely applicable to various commercially available general two-wheeled vehicles, that is, is a versatile control technique.

Further, in order to achieve the autonomous stable travel control, steering torque control with higher accuracy than the stable travel assistance control in the conventional art is required.

As a result of various studies, the present inventors have found that it is necessary to sufficiently consider not only a behavior of the vehicle as a moving object but also a behavior of the vehicle as a vibrating object, in order to achieve a power steering technique that has versatility and enables the autonomous stable travel.

That is, it is important to analyze vibration of the vehicle in consideration of characteristics of a front suspension called a front fork and a rear suspension which are attached to the two-wheeler, that is, a vibration reduction effect of each suspension.

Further, a development method called model based development (MBD), in which a simulation technique is incorporated into software development, is effective in developing an autonomous stable travel control system of a two-wheeler.

In the model based development, a model is "moving specifications", and analysis processing and the like are performed on a simulator implemented by using a computer. Therefore, a developer can actually see the visualized movements and perform various verifications and considerations.

However, it is very difficult to regard the two-wheeler as a moving object that moves while vibrating, rather than a simple moving object, and analyze complicated dynamic behaviors in detail using a vehicle model.

For example, due to non-linearity of a spring provided in the suspension, in other words, a suspension spring, an equation of motion indicating the behavior of the two-wheeler becomes a function including a quadratic term with respect to time, making the analysis difficult.

For example, in modern control theory, when analyzing a dynamic behavior of a system, a method of introducing a state variable as an internal variable that associates an input and an output of the system and describing the state variable by a first-order matrix differential equation called a state equation is adopted.

Since the state equation is a linear simultaneous equation, an equation of motion expressed by a function including a quadratic term with respect to time cannot be converted into the state equation and analyzed.

In the conventional art, the behavior of the two-wheeler is analyzed based on a simplified model having one center of gravity. However, an actual two-wheeler is designed to be divided into a front part and a rear part, and as an example, it is preferable to divide the two-wheeler into a front vehicle body, a rear vehicle body, a front suspension, and a rear suspension to perform analysis.

In this case, a method called multi-body dynamics (MD), in which a dynamic behavior and a performance of an object performing complicated motion are analyzed using simulation, is effective.

However, in the conventional art, a method of accurately analyzing the behavior of the two-wheeler, including the suspensions, using the multi-body dynamics has not been established.

Patent Literature 1 is based on the premise that a two-wheeler having a special shape is moved at an extremely low speed, and the autonomous driving technique lacks versatility.

In Patent Literature 2, a special device called the gyro actuator is integrally attached to the two-wheeler to perform posture control, and the posture control technique of Patent Literature 2 also lacks versatility.

In Patent Literature 3, an inclination angle or the like suitable for stable travel of the two-wheeler is actually measured using a two-wheeler robot, and autonomous stable travel of the two-wheeler is not achieved by the technique alone.

Patent Literature 4 discloses a steering assistance system for the two-wheeler using power steering, but in Patent Literature 4, a complicated behavior of the two-wheeler is not analyzed in consideration of characteristics of the suspensions.

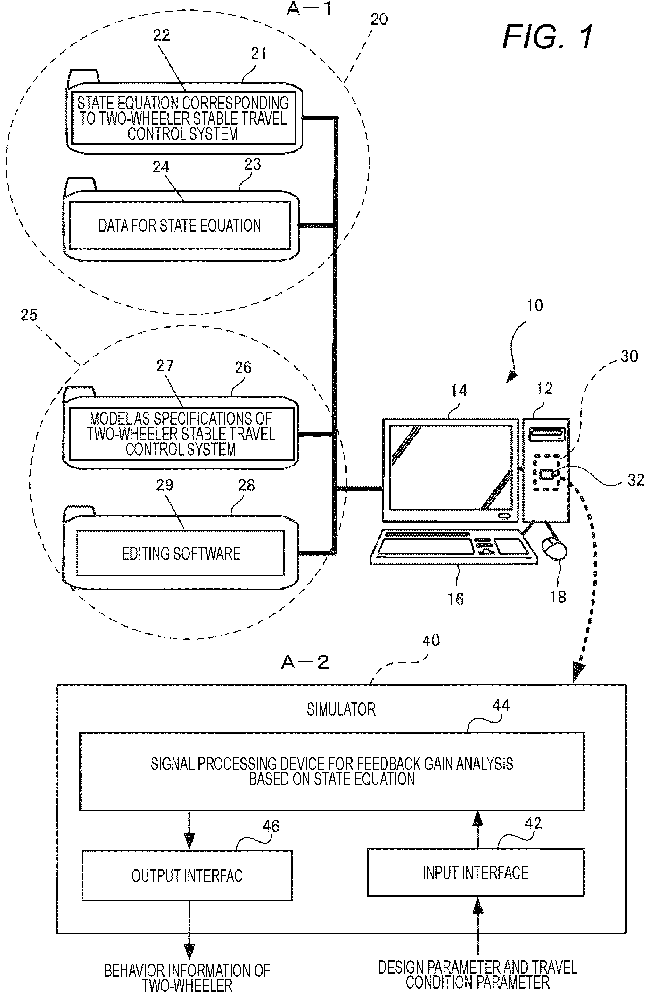

In Patent Literature 5, steering of the two-wheeler is controlled by using the steering actuator, but as shown in Fig. 1, for example, a model of the two-wheeler is a simple model having one center of gravity, and a complicated behavior of the two-wheeler is not analyzed in consideration of the characteristics of the suspensions.

Patent Literature 6 discloses a system for improving the driving performance of a leanable two-wheeler, but a complicated behavior of the two-wheeler is not analyzed in consideration of the characteristics of the suspensions.

Further, Patent Literature 6 discloses that various sensors such as a speed sensor and an inertial sensor are used, but there is no description about how to use many sensors to construct a negative feedback control system that enables the autonomous stable travel.

For example, Fig. 5 of Patent Literature 7 shows that a behavior of the four-wheeler is analyzed using the state equation, but a model of the four-wheeler is a simplified model having one center of gravity, and there is no reference to analysis of a complicated behavior of the two-wheeler in consideration of the characteristics of the suspensions. Therefore, Patent Literature 7 is not a reference in making the present invention.

Patent Literature 8 discloses a system and a method of simulating the multi-body system motion, but in Patent Literature 8, Hamilton's equation of motion describing motion of a classical motion dynamic system is analyzed. Since a method of analyzing the classical motion dynamic system is used, the analysis cannot be performed on a control target showing a complicated behavior, for example, a multi-input/multi-output control target as in analysis that is based on the modern control theory.

Patent Literature 9 discloses the device for deriving the equation of motion of the multi-rigid-body system and the method of deriving the equation of motion of the multi-rigid-body system using a principle of the virtual power and the Kane's equation of motion, but in Patent Literature 9, it is assumed that all constituent elements as the control target are rigid bodies.

Therefore, the device and method cannot be applied to analysis of a motion system including a non-rigid body element, for example, an element regarded as an elastic body or a flexible body with respect to predetermined motion.

As a control target including an element regarded as the elastic body or the flexible body with respect to a predetermined motion, for example, a two-wheeler system including a rigid vehicle body system and a tire system that supports the rigid vehicle body system and can be regarded as an elastic body or a flexible body with respect to vibration in the vertical direction can be assumed.

An object of the present invention is to provide, for a two-wheeler with a non-linear complicated behavior, a versatile two-wheeler stable travel control technique and the like capable of multilaterally and scientifically verifying travel stability of the two-wheeler, in other words, a method of modeling a two-wheeler stable travel control system, a two-wheeler stable travel simulator, a program, the two-wheeler stable travel control system, a two-wheeler stable travel control device, and the like.

### MEANS FOR SOLVING THE PROBLEM

As a result of intensive studies, the present inventors have found that a stable travel control system for a two-wheeler having excellent practicality and versatility can be developed by modeling the two-wheeler as a model including a plurality of centers of gravity and suspensions, integrating equations of motion for the respective centers of gravity to acquire a linearized equation of motion for a vehicle as the two-wheeler, converting the linear equation of motion into a state equation to analyze stability, and obtaining a feedback gain necessary for appropriate steering torque control for each speed within a desired speed range.

The present invention was completed based on these findings.

Hereinafter, the present disclosure will be described.

According to an aspect of the present disclosure, there is provided a method of modeling a two-wheeler stable travel control system including: a first step (S1) of acquiring a vehicle model obtained by modeling a two-wheeler into a model having a center of gravity (2f) of a front vehicle body, a center of gravity (2r) of a rear vehicle body, a center of gravity (1f) of a front tire (FT) including a front tire main body (104f) and a front suspension (106f), and a center of gravity (1r) of a rear tire (RT) including a rear tire main body (104r) and a rear suspension (106r); a second step (S2, S3) of creating a linear equation of motion for the vehicle model (MDL) on a condition that an action term indicating a sum of acting forces acting on the respective centers of gravity and an inertia term indicating a sum of inertial forces acting on the respective centers of gravity are balanced; and a third step (S4) of converting the linear equation of motion into a state equation; a fourth step (S5, S6) of acquiring, by analysis based on a root trajectory of the state equation, a feedback gain allowing stable travel of the vehicle model at a speed within a predetermined speed range; and a fifth step (S7) of creating a model (180) of the two-wheeler stable travel control system that performs negative feedback control using the feedback gain obtained in the fourth step.

According to another aspect of the present disclosure, there is provided a two-wheeler stable travel simulator (40) including: a signal processing device (44) configured to perform signal processing for acquiring the feedback gain in the fourth step in the method of modeling the two-wheeler stable travel control system according to the above aspect; an input interface (42) configured to input a design parameter of the vehicle model and a travel condition parameter of the vehicle model to the signal processing device; and an output interface (46) configured to output information on a behavior of the vehicle model in response to the parameters input from the input interface.

According to another aspect of the present disclosure, there is provided a program (32) causing a computer to operate as the two-wheeler stable travel simulator according to the above aspect.

According to still another aspect of the present disclosure, there is provided a two-wheeler stable travel control system (190) including: an actual two-wheeler (300); a power steering unit (312) attached to the actual two-wheeler and including, as a constituent element, a steering torque actuator (310) configured to generate a steering torque in the two-wheeler;
a measurement unit (350) configured to perform measurement processing based on outputs of a plurality of sensor units (301, 303, 305, 307, 308, 311, 313) attached to the actual two-wheeler; and
a power steering control unit (403) attached to the two-wheeler and including a steering torque actuator control signal generation unit (408) configured to generate a control signal for the steering torque actuator based on an output of the measurement unit.

According to still another aspect of the present disclosure, there is provided a two-wheeler stable travel control device (402) functioning as the power steering control unit (403) in the above two-wheeler stable travel control system.

### EFFECTS OF INVENTION

According to the present invention, it is possible to provide, for a two-wheeler with a non-linear complicated behavior, a versatility two-wheeler stable travel control technique and the like capable of multilaterally and scientifically verifying travel stability of the two-wheeler, in other words, a method of modeling a two-wheeler stable travel control system, a two-wheeler stable travel simulator, a program, the two-wheeler stable travel control system, a two-wheeler stable travel control device, and the like.

### BRIEF DESCRIPTION OF DRAWINGS

Fig. 1 is a diagram showing an example of a configuration of a computer system and a two-wheeler stable travel simulator.
Fig. 2 is a diagram showing a basic configuration example of a vehicle model of a two-wheeler.
Fig. 3 is a diagram showing a procedure example of a method of modeling a two-wheeler stable travel control system and a procedure example leading to construction of the two-wheeler stable travel control system.
Fig. 4 is a diagram showing a specific configuration example of the vehicle model of the two-wheeler and an example in which a speed and an angular speed at each of a plurality of centers of gravity are displayed as vectors.
Fig. 5 is a diagram showing the speed, the angular speed, an acceleration, an angular acceleration, an acting force, and an acting torque of each center of gravity in the vehicle model of the two-wheeler.
Fig. 6 is a diagram showing a definition example of a generalized speed in the vehicle model of the two-wheeler and a linearization method of a function using Jacobian at the generalized speed.
Fig. 7 is a diagram showing a linearized action term in the vehicle model of the two-wheeler.
Fig. 8 is a diagram showing a linearized inertia term in the vehicle model of the two-wheeler.
Fig. 9 is a diagram showing an outline of a method of acquiring a model of a stable travel control system of a two-wheeler by creating the Kane's equation of motion using a principle of virtual power for a vehicle model of the two-wheeler, converting the equation of motion into a state equation, and obtaining an appropriate feedback gain by analyzing a root trajectory.
Fig. 10 is a diagram showing, in a case where the present invention is applied to a two-wheeler that travels straight, an example of a simulation result of travel stability of the two-wheeler.
Fig. 11 is a diagram showing an example of a handle angle and a roll angle when the two-wheeler turns.
Fig. 12 is a diagram showing an example of a configuration of the stable travel control system of the two-wheeler using an actual two-wheeler.
Fig. 13 is a diagram showing another example of the configuration of the stable travel control system of the two-wheeler using an actual two-wheeler.
Fig. 14 is a diagram showing an example of a configuration in which update of a damping force value in a damper and measurement of an extension speed of a suspension are synchronized.
Fig. 15 is a diagram showing an example of a process of synchronizing the update of the damping force value in the damper and the measurement of the extension speed of the suspension.

### EMBODIMENTS FOR CARRYING OUT THE INVENTION

Embodiments of the present invention will be described below with reference to the accompanying drawings. The embodiments shown in the accompanying drawings are examples of the present invention, and the present invention is not limited to the embodiments.

### <Embodiment 1>

Reference is made to Fig. 1. Fig. 1 is a diagram showing an example of a configuration of a computer system and a two-wheeler stable travel simulator. The two-wheeler stable travel simulator may be simply referred to as a simulator.

In A-1 of Fig. 1, a computer system 10 includes a computer main body 12, a monitor 14, a keyboard 16 and a mouse 18 serving as input devices, and four folders 21, 23, 26, 28.

The folders 21, 23 constitute a first folder 20 that is used when acquiring a state equation corresponding to a vehicle model of a two-wheeler and correcting the state equation.

The folders 26, 28 constitute a second folder 25 that is used when creating a model as specifications of a two-wheeler stable travel control system by simulation by a simulator 40 and editing the model.

A storage device 30 in the computer main body 12 stores a program 32 for operating a computer, in other words, the computer system 10 as the two-wheeler stable travel simulator 40 shown in A-2 of Fig. 1, in other words, an analysis simulation program 32 of the two-wheeler stable travel control system.

A state equation 22 corresponding to the two-wheeler stable travel control system is stored in the folder 21. Data 24 for the state equations is stored in the folder 23.

The folder 26 stores a model 27 as specifications of the two-wheeler stable travel control system, that is, a program describing the specifications of the two-wheeler stable travel control system. When final specifications of the two-wheeler stable travel control system are determined as a result of the analysis in the simulator 40, a program describing the final specifications becomes the so-called "moving specifications" in the model based development or model-based design of the two-wheeler.

The folder 28 stores editing software 29 of the model 27.

In A-2 of Fig. 1, the two-wheeler stable travel simulator 40 includes a signal processing device 44 for feedback gain analysis based on the state equation, an input interface 42 for inputting design parameters of the vehicle model and travel condition parameters of the vehicle model to the signal processing device 44, and an output interface 46 for outputting information on a behavior of the vehicle model with respect to the parameters received from the input interface 42.

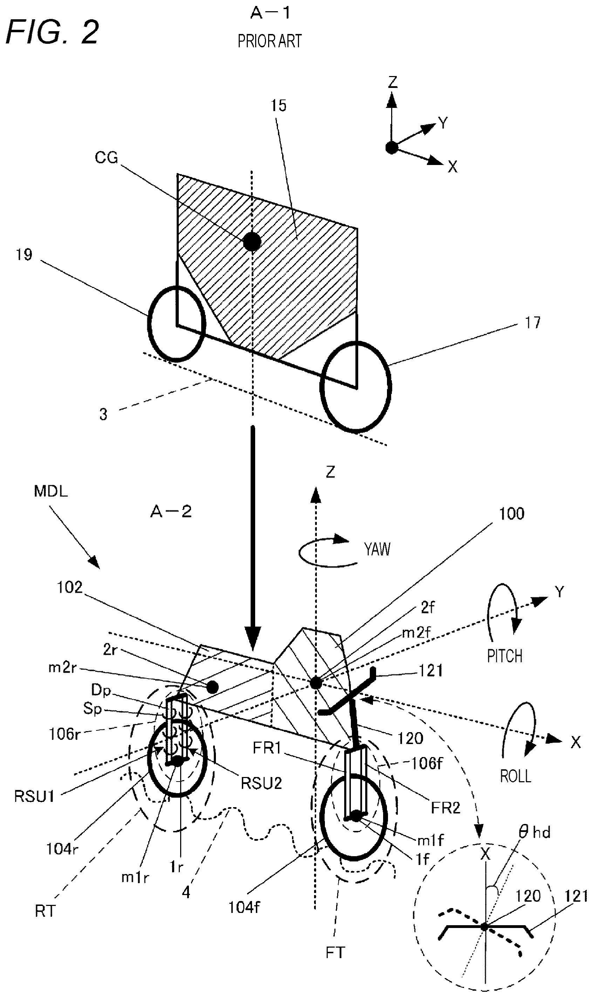

Next, reference is made to Fig. 2. Fig. 2 is a diagram showing a basic configuration example of the vehicle model of the two-wheeler. In Fig. 2, an X direction indicates a forward direction or a traveling direction, a Y direction indicates a lateral direction, and a Z direction indicates an upper-lower direction or a height direction.

A-1 of Fig. 2 schematically shows an example of a conventional vehicle model having one center of gravity. In A-1 of Fig. 2, the vehicle model of the two-wheeler includes a front wheel 17, a vehicle body 15, and a rear wheel 19, and one center of gravity CG is set for an entire vehicle. The vehicle model in A-1 of Fig. 2 travels on a flat road surface 3 without unevenness.

A-2 of Fig. 2 shows a vehicle model MDL having a plurality of centers of gravity 1f, 2f, 1r, and 2r suitable for an analysis method based on multi-body dynamics. Rotation of the vehicle model MDL around an X-axis is referred to as roll, rotation around a Y-axis is referred to as pitch, and rotation around a Z-axis is referred to as yaw.

The vehicle model MDL of the two-wheeler in A-2 of Fig. 2 is roughly divided into a front part and a rear part. The front part includes a handle 121, a steering shaft 120 as a rotation shaft of the handle 121, a front vehicle body 100, and a front tire FT. The rear part includes a rear vehicle body 102 and a rear tire RT.

The front tire FT can be rephrased as a front wheel or a front wheel part. The rear tire RT can be rephrased as a rear wheel or a rear wheel part.

The front tire FT includes a pair of front suspensions FR1, FR2 referred to as front forks and having a function as a damper, and a tire main body 104f. Each of the suspensions generally includes a damper and a spring, and in an example of A-2 of Fig. 2, an appearance of the front fork is shown, and the springs are provided inside the front suspensions FR1, FR2.

Further, in the following description, for ease of analysis, damping characteristics implemented by the pair of front suspensions FR1, FR2 are treated as being implemented by one virtual front suspension 106f.

The same applies to the rear tire RT. That is, the rear tire RT includes a pair of rear suspensions RSU1, RSU2. Each of the rear suspensions RSU1, RSU2 includes a damper Dp and a suspension spring Sp. Further, damping characteristics implemented by the pair of rear suspensions RSU1, RSU2 are treated as being implemented by one virtual rear suspension 106r.

A center of gravity of the front tire FT including the front suspension 106f is denoted by 1f, and a mass of the center of gravity is denoted by m1f.

A center of gravity of the front vehicle body 100 is denoted by 2f, and a mass of the center of gravity is denoted by m2f.

A center of gravity of the rear tire RT including the rear suspension 106r is denoted by 1r, and a mass of the center of gravity is denoted by m1r.

A center of gravity of the rear vehicle body 102 is denoted by 2r, and a mass of the center of gravity is denoted by m2r.

The vehicle model MDL is assumed to travel on an uneven road surface 4.

Further, the handle 121 viewed from a Z-axis direction, that is, an upper direction is shown on the lower right of A-2 in Fig. 2. It is assumed that the handle 121 rotates, for example, clockwise by a predetermined angle around the steering shaft 120 with a handle position when the two-wheeler is traveling straight in the X direction as a reference. In this case, the predetermined angle is set as a handle angle θhd.

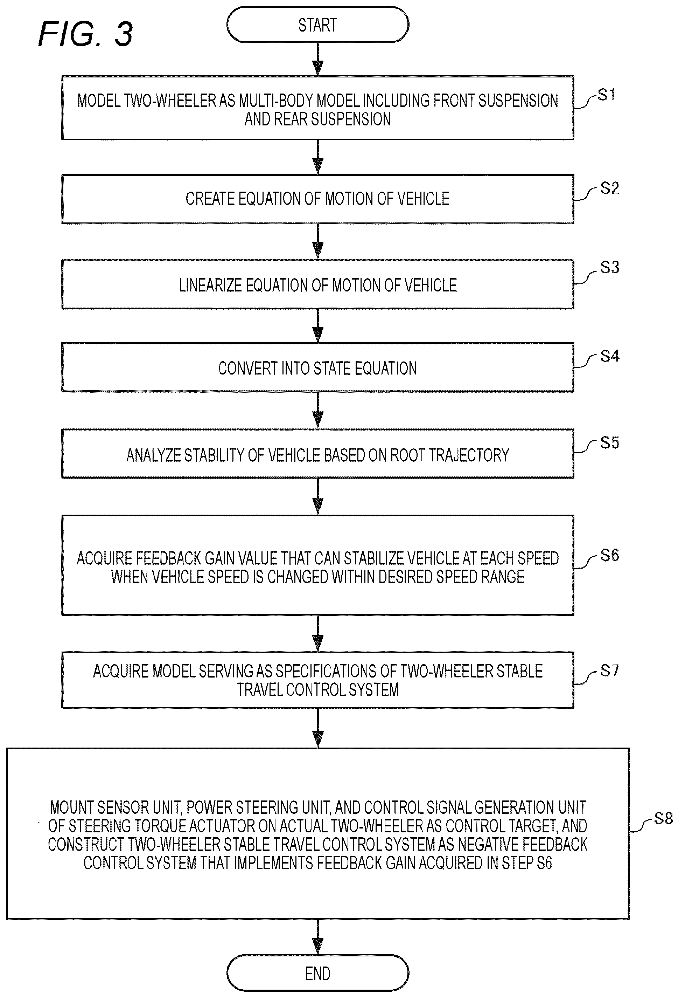

Next, a model based development method of the two-wheeler stable travel control system will be described. Reference is made to Fig. 3. Fig. 3 is a diagram showing a procedure example of a method of modeling the two-wheeler stable travel control system and a procedure example leading to construction of the two-wheeler stable travel control system.

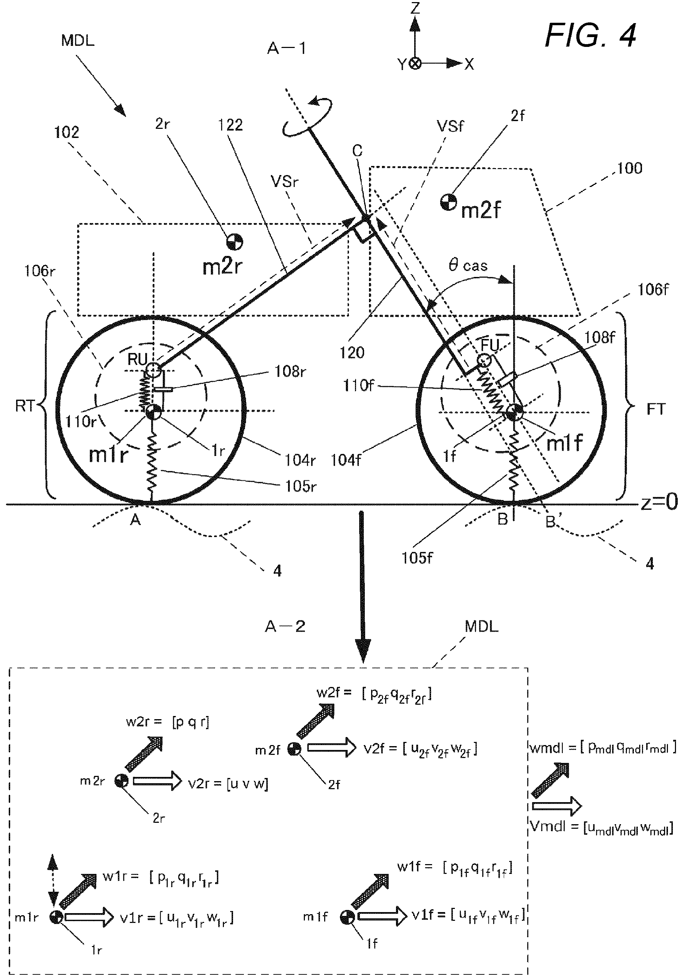

In step 1, the two-wheeler is modeled as a multi-body model including a front suspension and a rear suspension. In other words, the model of the two-wheeler can be said to be a model having a plurality of centers of gravity and including a rigid body and an elastic body or flexible body. An example of an outline of the model is shown in A-2 of Fig. 2. A specific example of the model will be described later with reference to Fig. 4.

In step S2, an equation of motion of the vehicle is created. In a preferred embodiment of the present invention, the Kane's equation of motion is used.

The Kane's equation of motion is an equation of motion that is derived based on a principle of virtual power by focusing on a point at which acting forces and acting torques acting on an object and inertial forces and inertial torques are balanced, and in which a virtual displacement in a generalized speed direction is assumed.

In the Kane's equation of motion, an inertia term or a non-linear term can be expressed using one kind of unit vector called a partial speed, and creation of the equation of motion is facilitated.

The generalized speed can be described as, for example, a speed or an angular speed in a generalized coordinate system that represents a speed or an angular speed of a certain position of an object in only one way as a sum of linear functions.

However, at the stage of step S2, the equation of motion includes a second-order non-linear term.

In step S3, the equation of motion of the vehicle is linearized. Specifically, for example, the linearization can be implemented by processing of multiplying a function represented by vectors by a Jacobian matrix functioning as a differential operator, in other words, a Jacobian. As the Jacobian, it is preferable to use a Jacobian at a generalized speed. This point will be described later. Taylor expansion or the like may be used.

In step S4, in order to enable analysis based on modern control theory, the equation of motion is converted into a state equation.

In step S5, stability of the vehicle is analyzed based on a root trajectory.

Here, the root trajectory is a trajectory drawn on a complex plane by a root of the state equation when the feedback gain is changed.

For example, a feedback control system can be evaluated as stable in a feedback gain value when the root trajectory is present in a region of a left half of the complex plane, and the feedback control system can be evaluated as unstable in a feedback gain value when the root trajectory is outside the region of the left half of the complex plane.

In step S6, the feedback gain value that can stabilize the vehicle at each speed when the vehicle speed is changed within a desired speed range is acquired.

In step S6, an optimum feedback gain under various conditions can be obtained at high speed by using the simulator 40 shown in A-2 of Fig. 1.

In the simulation performed by the simulator 40, it is preferable to perform the simulation on an assumption that when a rotation speed of an engine or an electric motor is changed, constant torque control is performed in which a torque of the engine or the electric motor is kept constant torque regardless of the rotation speed. Accordingly, a condition for linearizing the equation of motion is secured, and a decrease in simulation accuracy can be prevented. This point will be described later.

In a preferred embodiment, the desired speed range can be set to, for example, a vehicle speed of 1 m/s to 60 m/s in consideration of an actual traveling speed of an actual two-wheeler.

In step S7, the model as the specifications of the two-wheeler stable travel control system is acquired. When a feedback gain capable of ensuring the stability of the vehicle at all the speeds within the desired speed range is obtained by the analysis based on the simulator in step S6, a state of the two-wheeler stable travel control system in which the feedback gain is obtained is uniquely determined. The state is a model as a program referred to as the so-called "moving specifications", in other words, the specifications of the two-wheeler stable travel control system.

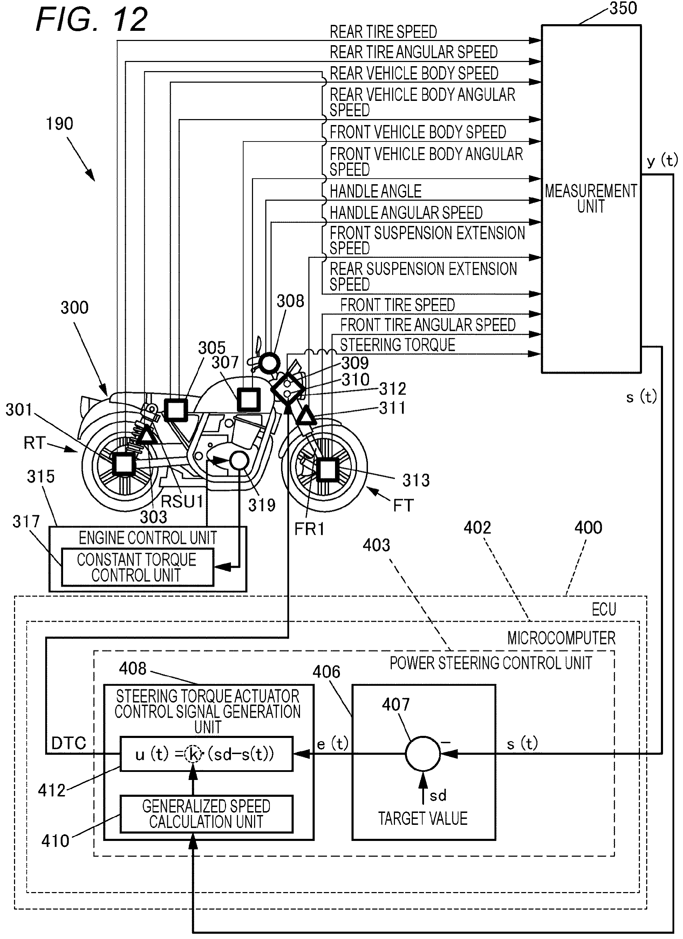

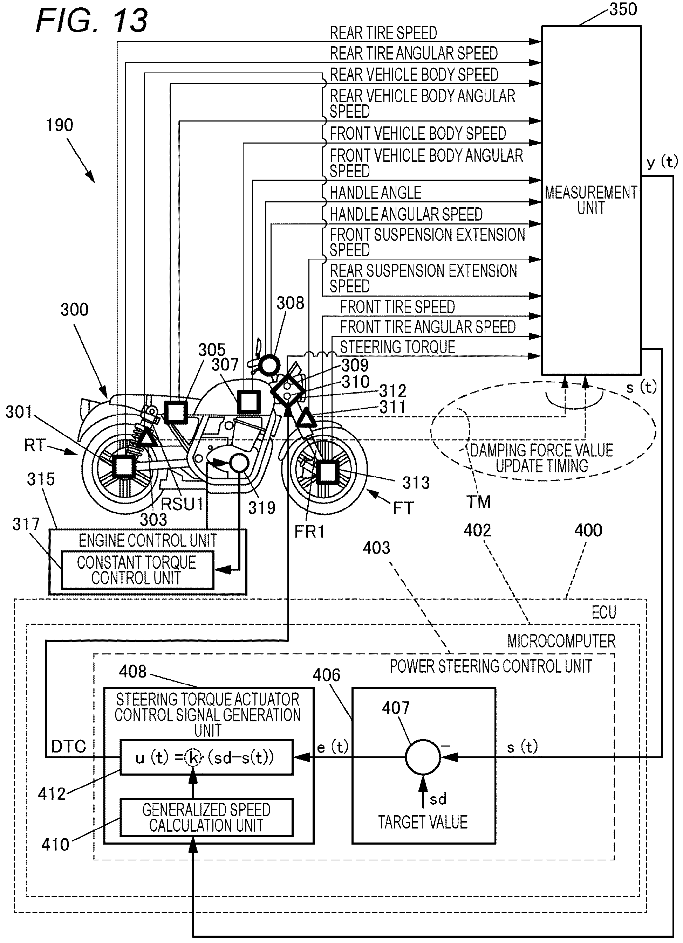

In step S8, for example, a sensor unit, a power steering unit, and a control signal generation unit of a steering torque actuator are mounted on an actual two-wheeler as the control target, that is, an actual vehicle, and the two-wheeler stable travel control system as a negative feedback control system that implements the feedback gain acquired in step S6 is constructed. An example of the constructed two-wheeler stable travel control system will be described later with reference to Figs. 12 and 13.

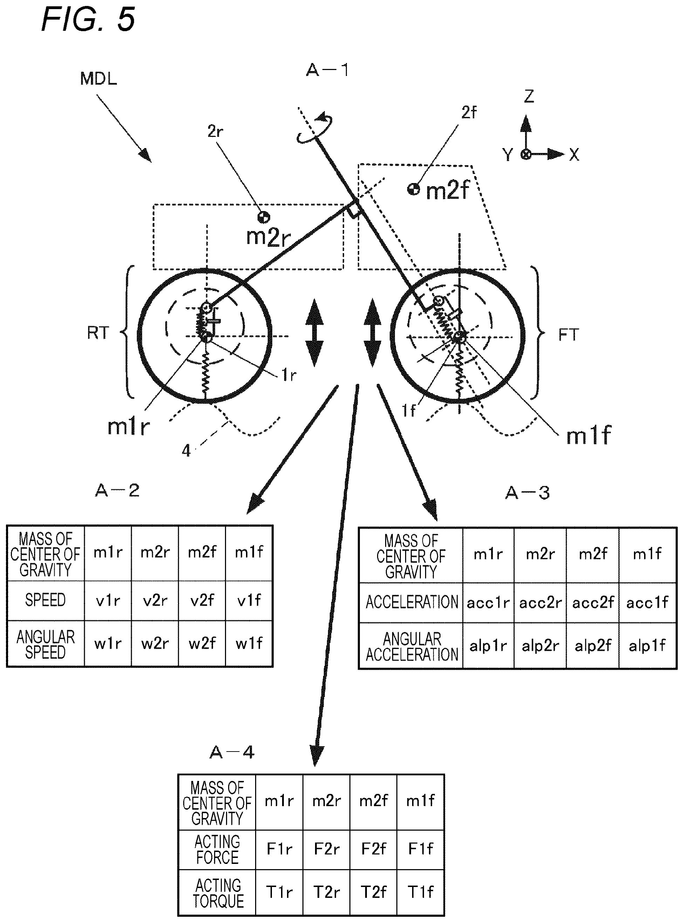

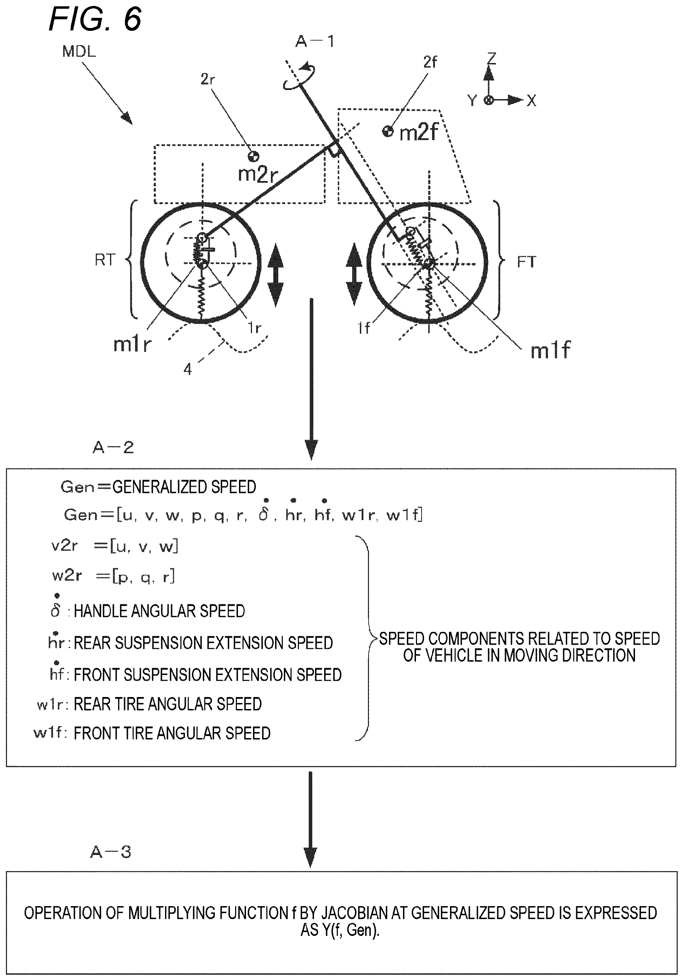

Next, reference is made to Fig. 4. The figure is a diagram showing a specific configuration example of the vehicle model of the two-wheeler and an example in which a speed and an angular speed at each of a plurality of centers of gravity are displayed as vectors. In A-1 of Fig. 4, the same components as those in A-2 of Fig. 2 are denoted by the same reference numerals. This point also applies to Figs. 5 and 6. In A-1 of Fig. 4, the handle is not shown for convenience of description. This point also applies to Figs. 5 and 6.

As described above, the center of gravity of the front tire FT is set as 1f, the mass of the center of gravity 1f is set as m1f, the center of gravity of the front vehicle body 100 is set as 2f, the mass of the center of gravity 2f is set as m2f, the center of gravity of the rear tire RT is set as 1r, the mass of the center of gravity 1r is set as m1r, the center of gravity of the rear vehicle body 102 is set as 2r, and the mass of the center of gravity 2r is set as m2r.

In A-1 of Fig. 4, the front vehicle body 100 and the rear vehicle body 102 are treated as rigid bodies. Further, in a general actual two-wheeler, the tire main body includes a rim that is present on an inner side and is regarded as a rigid body, a pneumatic tube that is present on an outer side and is elastically deformable, and the like. During modeling of the tire main body, the tire main body can be treated as an elastic body or a flexible body for convenience, considering the three-dimensionally elastically deformable characteristics.

Therefore, each of the front tire main body 104f included in the front tire FT and a rear tire main body 104r included in the rear tire RT is modeled such that at least a part thereof is an elastic body or a flexible body on a premise of being elastically deformable.

In a preferred embodiment, the front tire main body 104f and the rear tire main body 104r can be modeled using a magic formula.

The magic formula is a formula obtained by identifying a value of a parameter indicating a characteristic of a tire based on experimental data obtained by a tire testing machine, and is a formula in which a force from a road surface or a torque reaction force of the tire is represented by a trigonometric function or the like.

Reference numeral 105f denotes a spring representing elastic characteristics of the front tire main body 104f.

The front suspension 106f includes a spring 110f, in other words, a suspension spring 110f, and a front damper 108f. Reference numeral FU denotes a point on an upper portion of the front suspension 106f. The front damper may be simply referred to as a damper.

Reference numeral 105r denotes a spring representing elastic characteristics of the rear tire main body 104r.

The rear suspension 106r includes a spring 110r, in other words, a suspension spring 110r, and a rear damper 108r. The suspension spring 110r corresponds to a spring Sp shown in A-2 of Fig. 2. The rear damper may be simply referred to as a damper. Reference numeral RU denotes a point on an upper portion of the rear suspension 106r.

A caster angle θcas of the steering shaft 120 is determined such that the steering shaft 120 and the rear vehicle body shaft 122 are orthogonal to each other.

Accordingly, a vector VSf as a vibration component reflecting damping characteristics of the front suspension 106f and generated in an extending direction of the steering shaft 120 and a vector VSr as a vibration component reflecting damping characteristics of the rear suspension 106r and generated in an extending direction of the rear vehicle body shaft 122 are orthogonal to each other, and an inner product of the vectors is zero, so that the vectors can be treated as independent vectors without interfering with each other. Therefore, the vibration component caused by the front suspension 106f and the vibration component caused by the rear suspension 106r can be handled independently, and the analysis is facilitated.

In A-1 of Fig. 4, reference numeral A denotes a contact point between the rear tire RT and ground, reference numeral B denotes a contact point between the front tire FT and the ground, reference numeral B' denotes an intersection point between the steering shaft 120 and the ground, and reference numeral C denotes an intersection point between the rear vehicle body shaft 122 and the steering shaft 120.

Further, the front vehicle body 100 rotates around an axis CB' when viewed from the rear vehicle body 102, and the front tire main body 104f and the rear tire main body 104r are treated as rotating. The front tire main body 104f and the rear tire main body 104r are treated as being in contact with the ground at one point, that is, the point A and the point B, respectively.

Reference is made to A-2 of Fig. 4. In the figure, v denotes the speed, and w denotes the angular speed. Since the speed and the angular speed act on each of the centers of gravity 1f, 2f, 1r, 2f, the speed and the angular speed with respect to the center of gravity 1f are denoted by, for example, v1f and w1f in order to distinguish the speed and the like acting on which center of gravity. The same notation applies to the other centers of gravity.

Further, u, v, and w are coordinate axes of the generalized speed in a generalized coordinate system corresponding to the orthogonal coordinate axes X, Y, and Z in the three-dimensional space, respectively.

Further, p, q, and r are coordinate axes of the generalized angular speed in the generalized coordinate system corresponding to the orthogonal coordinate axes X, Y, and Z in the three-dimensional space, respectively.

In A-2 of Fig. 4, a speed v2r for the center of gravity m2r is denoted by a function of u, v, and w, and an angular speed w2r is denoted by a function of p, q, and r.

The same applies to the other centers of gravity m2f, m1r, and m1f, but in order to distinguish the speed and the angular speed for each of the centers of gravity, the reference numerals of the centers of gravity are added to u, v, w, p, q, and r.

The same applies to the speed and the angular speed of the entire model MDL, but in order to distinguish the speeds and the angular speeds of the four centers of gravity, the speed and the angular speed of the model MDL are indicated by adding a reference numeral mdl to each of u, v, w, p, q, and r.

Further, since the centers of gravity 1f, 2f, 1r, 2f are bound under predetermined binding conditions and exhibit behaviors as one moving body, a state in which the speed and the angular speed as shown in A-2 of Fig. 4 act on each center of gravity, that is, a state in which a speed vmdl and an angular speed wmdl act on the vehicle model MDL, and both are equivalent.

For example, when an expression "the speed of the vehicle model MDL" is used, "the speed of the vehicle model MDL" is uniquely determined by calculating the vectors of the speeds v1f, v2f, v1r, and v2r acting on the centers of gravity 1f, 2f, 1r, and 2r included in the vehicle model MDL.

Therefore, observing or measuring "the speed of the vehicle model MDL" is synonymous with observing or measuring "the speed at each center of gravity". This point also applies to the angular speed.

The term "observe" is used for analyzing the model of the two-wheeler stable travel control system constructed on a computer, and the term "measure" is used for analyzing the two-wheeler stable travel control system applied to the actual two-wheeler.

For example, in Figs. 12 and 13 to be described later, when measuring "the speed of the vehicle of the actual two-wheeler", "the speed at a location corresponding to each center of gravity in the vehicle of the actual two-wheeler" is measured.

Next, reference is made to Fig. 5. Fig. 5 is a diagram showing the speed, the angular speed, an acceleration, an angular acceleration, an acting force, and an acting torque of each center of gravity in the vehicle model of the two-wheeler. In Fig. 5, the same components as those in Fig. 4 are denoted by the same reference numerals.

A-1 of Fig. 5 shows the configuration of A-1 of Fig. 4 in a simplified manner.

In A-2 of Fig. 5, the speeds and the angular speeds at the masses m1r, m2r, m1f, m2f of the respective centers of gravity are shown in a table format.

Each of the speeds v1r, v2r, v2f, v1f in A-2 of Fig. 5 corresponds to the speed of the vehicle or the vehicle model as described above. Similarly, each of the angular speeds wlr, w2r, w2f, w1f corresponds to the angular speed of the vehicle or the vehicle model as described above.

The speed v1r reflects an extension speed of the rear suspension, and the speed v1f reflects an extension speed of the front suspension. Further, a handle angular speed is reflected in w2f.

In A-3 of Fig. 5, the accelerations and the angular accelerations at the masses m1r, m2r, m1f, m2f of the respective centers of gravity are shown in a table format.

In A-4 of Fig. 5, the acting forces and the acting torques at the masses m1r, m2r, m1f, m2f of the respective centers of gravity are shown in a table format. T2r and T2f are acting torques reflecting inputs of a handle torque.

Next, reference is made to Fig. 6. Fig. 6 is a diagram showing a definition example of the generalized speed in the vehicle model of the two-wheeler and a linearization method of a function using the Jacobian at the generalized speed.

A-1 of Fig. 6 is the same as A-1 of Fig. 5.

A-2 of Fig. 6 is a diagram showing an example of definition of the generalized speed for the vehicle model MDL of the two-wheeler shown in A-1 of Fig. 6.

As shown in A-2 of Fig. 6, the generalized speed of the vehicle model MDL is defined to include a plurality of speed components related to the speed of the vehicle in a moving direction.

For example, when it is assumed that an actual vehicle is moving forward on a road surface, the speed is usually measured by a speedometer provided in the vehicle, based only on a rotation speed of a tire, for example.

However, when microscopically observing the speed of the vehicle in more detail, it is necessary to consider various force components acting on the vehicle.

For example, a part of a moment generated by turning the handle is also involved in moving the vehicle forward. Further, for example, a part of a vibration component generated by the extension of the suspension is also involved in moving the vehicle forward.

From such a viewpoint, in A-2 of Fig. 6, various speed components related to the speed in the moving direction of the vehicle are taken in as many variables as possible to create a function, and the generalized speed is defined by the function, thereby enabling more detailed analysis of the behavior of the two-wheeler in the moving direction of the vehicle.

In A-2 of Fig. 6, a function Gen is defined that includes, as parameters, the speed v2r for each of the axes u, v, w, and the angular speed w2r for each of the axes p, q, r, all of which act on the mass m2r of the center of gravity 2r of the rear vehicle body the handle angular speed, the rear suspension extension speed, the front suspension extension speed, the angular speed w1r of the rear tire, and the angular speed w1f of the front tire. Here, the function Gen is defined as the generalized speed of the vehicle model MDL or the actual vehicle.

In step S3 of Fig. 3, the linearization of the equation of motion is performed as described above. In this case, the linearization is performed by multiplying a function including a non-linear term expressed by the vectors by the Jacobian serving as the differential operator.

At this time, under a condition that the generalized speed of the vehicle model is constant without varying in a very short time, an operation of multiplying the function by the Jacobian is performed, and thereby the non-linear term can be approximated to a first order, in other words, approximated linearly.

Therefore, during the linearization of the equation of motion, it is necessary to ensure that the generalized speed of the vehicle model, which is a pre-condition of the linear approximation, is constant without varying in a very short time.

This point also applies to a case where the present invention is applied to an actual two-wheeler. For this purpose, it is effective to perform constant torque control in which the torque of the engine or the electric motor of the actual vehicle is controlled to be constant regardless of the rotation speed, and to minimize a fluctuation of each component related to the speed of the vehicle in the moving direction. Accordingly, a decrease in accuracy of the stable travel control of the two-wheeler can be prevented.

A-3 in Fig. 6 shows an example of an expression of multiplying the function by the Jacobian. That is, an operation of multiplying the function f by the Jacobian at the above generalized speed is expressed as Y(f, Gen).

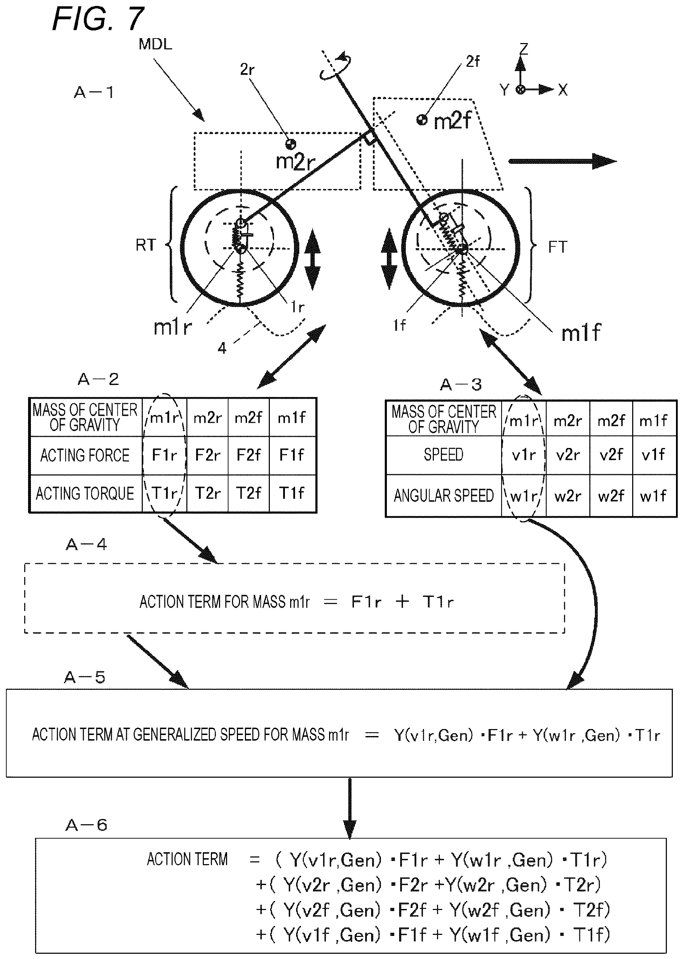

Next, reference is made to Fig. 7. Fig. 7 is a diagram showing a linearized action term in the vehicle model of the two-wheeler.

A-1 of Fig. 7 is the same as A-1 of Fig. 6.

In A-2 of Fig. 7, the acting forces and the acting torques acting on the masses m1r, m2r, m2f, m1f of the respective centers of gravity 1r, 2r, 2f, 1f are shown in a table format.

A-3 of Fig. 7 shows the table of A-2 of Fig. 5 again.

A-4 of Fig. 7 shows that, as an example, action terms for the mass m1f can be represented by adding an acting force F1r and an acting torque T1r. The same applies to other masses.

In A-5 of Fig. 7, as an example, an equation indicating action terms at the generalized speed for the mass m1f is shown. In the equation, the expression indicating the operation of applying the Jacobian to the function shown in A-3 in Fig. 6 is adopted. The same applies to other masses.

As shown in A-6 of Fig. 7, the linearized action terms of the vehicle model, in other words, the linearized action terms of the vehicle can be calculated by adding the action term for each mass, in other words, by taking an inner product of each vector.

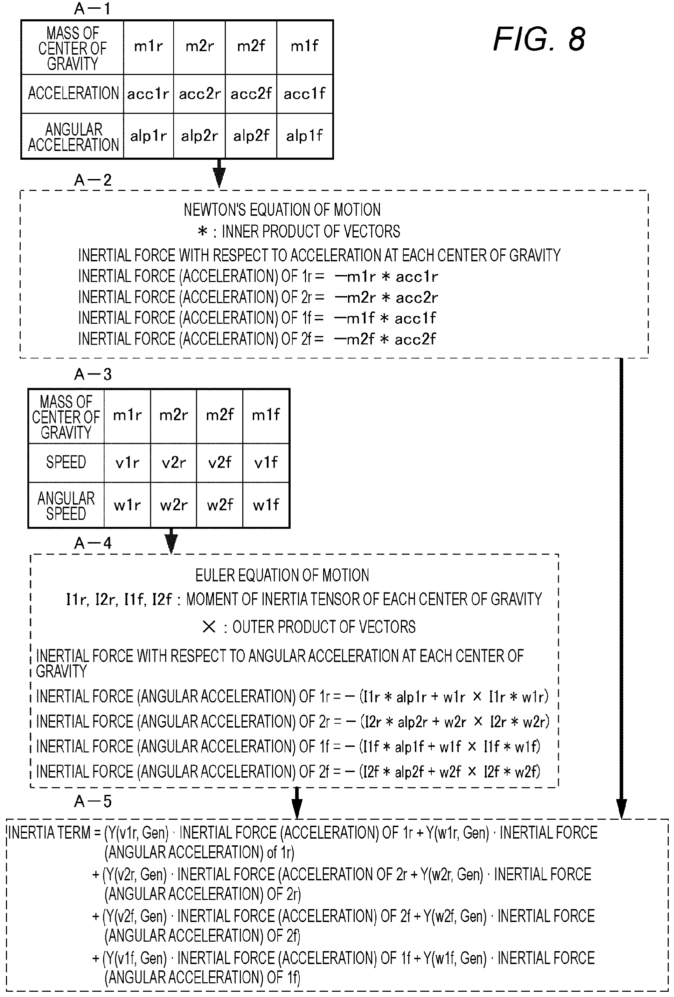

Next, reference is made to Fig. 8. The figure is a diagram showing the linearized inertia terms in the vehicle model of the two-wheeler.

A-1 of Fig. 8 shows the table of A-3 of Fig. 5 again.

A-2 in Fig. 8 shows the inertial force for the acceleration at each of the centers of gravity 1r, 2r, 1f, 2f, in other words, an inertial force of linear motion. The inertial force of the linear motion can be expressed using an inner product of the vectors according to the known Newton's equation of motion.

A-3 of Fig. 8 shows the table of A-2 of Fig. 5 again.

A-4 in Fig. 8 shows the inertial force for the angular acceleration at each of the centers of gravity 1r, 2r, 1f, 2f, in other words, an inertial force of rotation motion. The inertial force of the rotation motion can be expressed using an outer product of a moment of inertia tensor of each center of gravity and the vectors according to the known Euler equation of motion.

A-5 of Fig. 8 illustrates a method of calculating the inertia term of the vehicle model, in other words, the inertia term of the vehicle model. At the generalized speed shown in A-2 of Fig. 6, a function indicating the inertial force for the angular acceleration of each center of gravity obtained in A-4 in Fig. 8 is multiplied by the Jacobian to calculate a linearized inertial force of each center of gravity, and the linearized inertial force of each center of gravity obtained in this way is added, that is, an inner product of the vectors is obtained, and thereby a linearized inertia term of the vehicle model, that is, a linearized inertia term of the vehicle can be calculated.

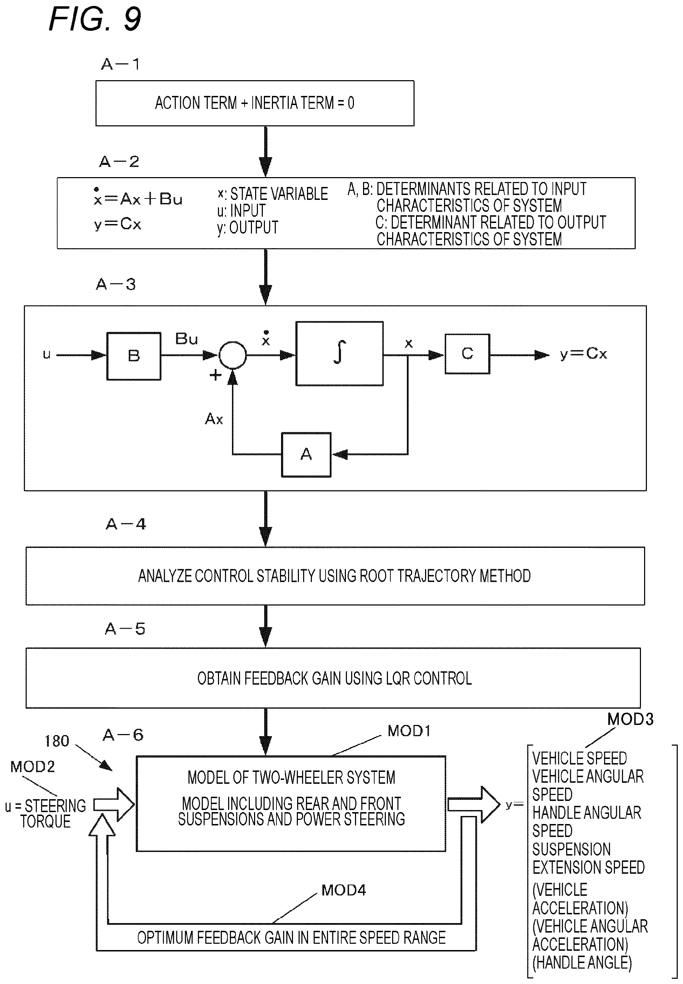

Next, reference is made to Fig. 9. Fig. 9 is a diagram showing an outline of a method of acquiring the model of the stable travel control system of the two-wheeler by creating the Kane's equation of motion using the principle of virtual power for the vehicle model of the two-wheeler, converting the equation of motion into the state equation, and obtaining the appropriate feedback gain by analyzing the root trajectory.

A-1 in Fig. 9 shows the Kane's equation of motion using the principle of virtual power. According to the principle of virtual power, since the action terms and the inertia terms acting on the object are balanced, the Kane's equation of motion can be created using the relationship.

A coefficient for the virtual displacement in the generalized speed direction can be uniquely determined by solving the Kane's equation of motion. The Kane's equation of motion is a linear equation of motion, and thus can be converted into the state equation which is a first-order simultaneous differential equation.

A-2 in Fig. 9 shows a form of the state equation used in the present invention. In the state equation in A-2 of Fig. 9, x is a state variable, u is an input, y is an output, A and B are determinants related to input characteristics of the system, and C is a determinant related to output characteristics of the system.

A-3 in Fig. 9 is a block diagram showing the state equation shown in A-2 in Fig. 9. As can be seen from the block diagram, the state equation shown in A-2 of Fig. 9 indicates a feedback control system having a feedback path of the feedback gain A. Here, if the feedback gain can be appropriately adjusted, it is possible to construct a negative feedback control system capable of converging a fluctuation of the input within a predetermined time, in other words, a negative feedback control system having stable controllability.

If the feedback gain is not appropriate, the input diverges, and the negative feedback control system cannot be constructed.

A-4 in Fig. 9 shows that the root trajectory method is effective in order to acquire the appropriate feedback gain, in other words, in analysis of control stability. The root trajectory is a trajectory drawn on the complex plane by the root of the state equation when the feedback gain is changed. For example, the feedback control system can be evaluated as stable in the feedback gain value when the root trajectory is present in the region of the left half of the complex plane, and the feedback control system can be evaluated as unstable in the feedback gain value when the root trajectory is outside the region of the left half of the complex plane.

A-4 in Fig. 9 shows that linear quadratic regulation (LQR) can be used as a specific method for obtaining the appropriate feedback gain. Specifically, in order to obtain a control input that can quickly converge the fluctuation of the state variable, a solution of the Riccati equation is obtained.

In the present embodiment, the speed of the vehicle is changed from 1 m/s to 60 m/s, for example, in increments of 1 m/s, and an optimum feedback gain for each speed is obtained. When the optimum feedback gain is obtained, a model of a two-wheeler stable travel system allowing stable travel of the two-wheeler can be obtained using the optimum feedback gain.

A-5 of Fig. 9 shows a configuration example of the obtained model of the two-wheeler stable travel system.

A model 180 of the two-wheeler stable travel system includes a model MOD1 of a two-wheeler system that is the control target, a model MOD2 of an input system for inputting an input variable to the model MOD1 of the two-wheeler system, a model MOD3 of an output system for outputting an output variable from the model MOD1 of the two-wheeler system, and a model MOD4 of a feedback system for changing a value of the input variable in the model MOD2 of the input system by feedback performed using the feedback gain, which is acquired in step S6 of Fig. 3, and based on the output variable.

In the example in A-5 of Fig. 9, the input variable is a steering torque of the two-wheeler.

The model MOD1 of the two-wheeler system is a model with a rear suspension/front suspension and a power steering.

In other words, the model MOD1 of the two-wheeler system is a multi-body model of two rigid bodies/two elastic bodies including two rigid bodies, that is, the rear vehicle body and the front vehicle body, and two elastic bodies, that is, the rear tire including the rear suspension and the front tire including the front suspension, at least a part of which can be regarded as an elastic body.

Specifically, the model MOD3 of the output system can output, in other words, can observe at least the vehicle speed, the vehicle angular speed, the handle angular speed, and the suspension extension speed. More preferably, the vehicle acceleration, the vehicle angular acceleration, and the handle angle can be output, in other words, can be observed.

The model MOD4 of the feedback system has a function of realizing an optimum feedback gain for each speed within a predetermined speed range, in other words, a loop gain of a negative feedback loop of the negative feedback control system that preferably causes the model MOD1 of the two-wheeler system to travel autonomously and stably.

In this way, it is possible to create the model 180 of the two-wheeler stable travel control system as the negative feedback control system in which the model MOD1 of the two-wheeler system is set as the control target, the input of the model MOD1 of the two-wheeler system includes at least a steering torque u of the two-wheeler, an output y of the model MOD1 of the two-wheeler system includes at least the speed of the vehicle model, the angular speed of the vehicle model, the handle angular speed of the handle included in the vehicle model, and the suspension extension speed in each of the front suspension and the rear suspension, and negative feedback control based on the feedback gain acquired in the processing of A-5 of Fig. 9 is performed based on the output of the vehicle model, thereby controlling the steering torque serving as the input u of the model MOD1 of the two-wheeler system.

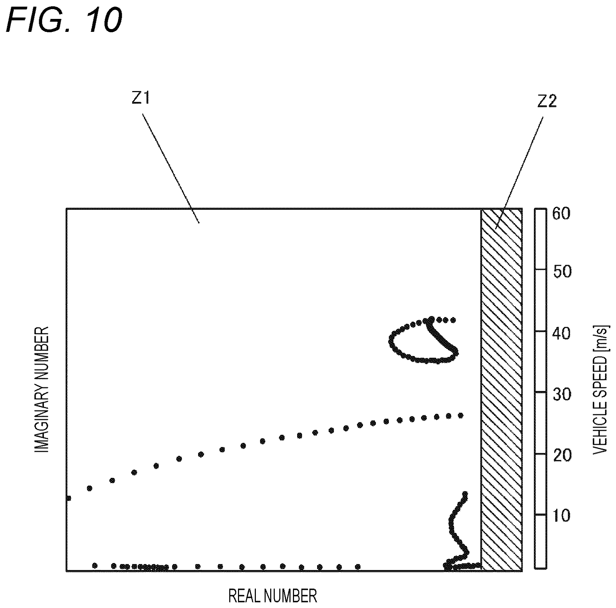

Next, reference is made to Fig. 10. Fig. 10 is a diagram showing, in a case where the present invention is applied to a two-wheeler that travels straight, an example of a simulation result of travel stability of the two-wheeler.

As described above, the control stability of the two-wheeler system can be analyzed by the root trajectory of the state equation. The root trajectory is a trajectory drawn on the complex plane by the root of the state equation when the feedback gain is changed, and the feedback control system can be evaluated as stable in the feedback gain value when the root trajectory is present in the region of the left half of the complex plane, and the feedback control system can be evaluated as unstable in the feedback gain value when the root trajectory is outside the region of the left half of the complex plane, that is, in an unstable region.

In Fig. 10, a region Z1 without a pattern is a stable region in the complex plane, and a region Z2 with oblique lines is the unstable region in the complex plane.

In Fig. 10, for the vehicle model of the two-wheeler, the vehicle speed is changed from 1 m/s to 60 m/s, the root trajectory corresponding to each vehicle speed is obtained, and the result is drawn on the complex plane. In Fig. 10, the root trajectory is represented by discrete points or a line in which the points are continuous.

According to the analysis based on the root trajectory performed in advance by the present inventors, it is known that, when the negative feedback control is not performed at all, an event occurs in which the root trajectory is present in the unstable region Z2 in a range of the vehicle speed of 1 m/s to 7.2 m/s and a range of 14.2 m/s to 60 m/s, and the travel stability decreases.

As can be seen from Fig. 10, the root trajectory when the present invention is applied is within the stable region Z1 and does not enter the unstable region Z2 within the entire range of the vehicle speed from 1 m/s to 60 m/s. That is, the travel stability of the two-wheeler traveling straight can be ensured within the entire vehicle speed range.

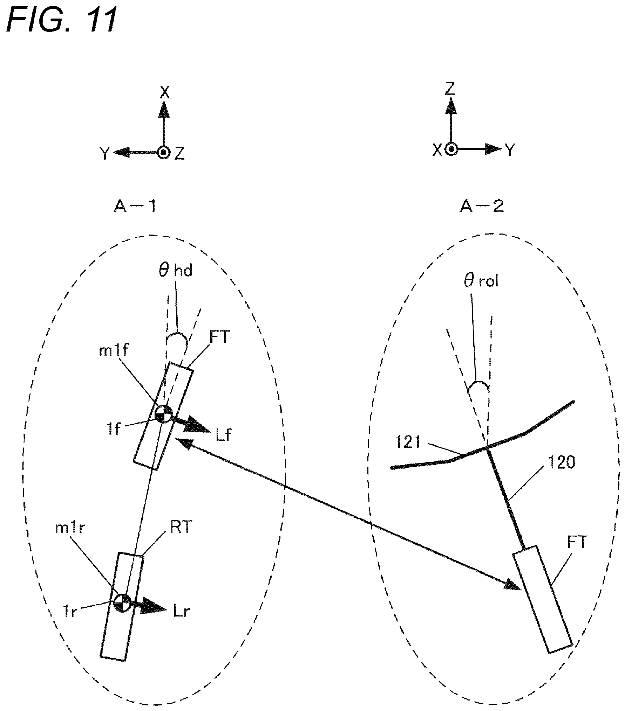

Next, reference is made to Fig. 11. Fig. 11 is a diagram showing an example of the handle angle and a roll angle when the two-wheeler turns.

Even when the two-wheeler turns, the feedback gain required for stable travel can be obtained using the same method as described with reference to Figs. 2 to 9. However, the state equation applied in a case where the two-wheeler performs turning travel is not the same as the state equation applied in the case where the two-wheeler travels straight.

In other words, it is necessary to make the state equation suitable for analyzing a state of turning of the two-wheeler, by transforming the state equation applied when the two-wheeler travels linearly, considering a change in the state of the turning of the two-wheeler, or by adding a new term.

In Fig. 11, it is considered how to change the state equation. A-1 of Fig. 11 shows a state in which the model of the two-wheeler shown in A-2 of Fig. 2 is turning right in a plan view viewed from the Z-axis direction. In A-1 of Fig. 11, the two-wheeler model is simplified for convenience of description. In A-1 of Fig. 11, illustration of the handle is omitted.

Further, A-2 of Fig. 11 is a front view of the model of the two-wheeler in the state of A-1 of Fig. 11 as viewed from the X-axis direction.

In A-1 and A-2 of Fig. 11, the same components as those in A-2 of Fig. 2 are denoted by the same reference numerals. As shown in A-2 of Fig. 11, when the two-wheeler turns, the two-wheeler turns with the vehicle body tilted. A roll angle at this time is defined as θrol.

A motorcycle will be described as an example. Usually, a motorcycle is provided with a mechanism called self-steering in which a handle, that is, a steering naturally turns in a direction in which the vehicle body is inclined even when a rider is not conscious.

When the two-wheeler turns, the steering is directed inward by the self-steering, and the two-wheeler can turn without difficulty by an inward lateral force generated by a camber angle of the tire, that is, a camber thrust force. However, depending on a turning state, a turning force due to a slip angle may act.

In A-1 of Fig. 11, the two-wheeler turns right at the handle angle θhd, and at this time, a lateral force Lf as indicated by a thick arrow is generated in the front tire FT in a direction opposite to a centrifugal force, and a lateral force Lr as indicated by a thick arrow is generated in the rear tire FT in a direction opposite to the centrifugal force.

Therefore, when analyzing the travel stability of the two-wheeler during turning, for example, it is necessary to determine the speed, the angular speed, the acceleration, the angular acceleration, the acting force, and the acting torque of the four centers of gravity 1f, 1r, 2f, 2r in consideration of influences of the lateral force Lf generated in the rear tire FT and the lateral force Lr acting on the front tire RT and in consideration of the centrifugal force, a wind force, and the like generated during the turning.

Further, in the turning of the two-wheeler, for example, it is necessary to observe or measure the roll angle θrol and the like, and since variables to be considered increase, in the state equation, it is necessary to add a term or update a value of the coefficient to a value different from that at the time of linear traveling.

If the state equation suitable for the stability analysis of the turning travel of the two-wheeler is obtained, the feedback gain necessary for the stable travel can be obtained for all speeds within the predetermined speed range using the same method as described above with reference to Figs. 2 to 9. Therefore, it is possible to obtain a model of the stable travel control system for the two-wheeler that also handles the turning.

Next, reference is made to Fig. 12. Fig. 12 is a diagram showing an example of a configuration of the stable travel control system of the two-wheeler using an actual two-wheeler.

A stable travel control system 190 of a two-wheeler using an actual two-wheeler includes a two-wheeler main body 300, and a rear tire sensor unit 301, a rear suspension sensor unit 303, a rear vehicle body sensor unit 305, a front vehicle body sensor unit 307, a handle sensor unit 308, a power steering unit 312, a front suspension sensor unit 311, a front tire sensor unit 313, an engine control unit 315, a measurement unit 350, and an electronic control unit (ECU) 400, which are provided in the two-wheeler main body 300.

The power steering unit 312 includes a steering torque sensor 309 and a steering torque actuator 310.

The engine control unit 315 includes a constant torque control unit 317 that controls an output of the engine or an electric motor 319, that is, a torque of the engine or the electric motor 319 to be constant.

The torque of the engine or the electric motor 319 affects the moment acting on each of the four centers of gravity described above. When the torque of the engine or the electric motor, that is, the moment fluctuates with a change in a rotation speed of the engine or the electric motor 319, that is, a change in the vehicle speed of the two-wheeler, the generalized speed shown in A-2 of Fig. 6 is also affected, and an error associated with the linearization of the equation of motion increases to cause a decrease in control accuracy of the negative feedback control, and thus constant torque control is performed to stabilize the output of the engine or electric motor 319 and prevent the decrease in the control accuracy of the negative feedback control.

The rear tire sensor unit 301 detects a rear tire speed and a rear tire angular speed, and supplies detection signals to the measurement unit 350. However, the rear tire acceleration and the rear tire angular acceleration may also be detected using a 6-axis micro electro mechanical systems (MEMS) sensor or the like.

The rear suspension sensor unit 303 detects the rear suspension extension speed and supplies a detection signal to the measurement unit 350.

The rear vehicle body sensor unit 305 detects a rear vehicle body speed and a rear vehicle body angular speed, and supplies detection signals to the measurement unit 350. However, for example, a rear vehicle body acceleration and a rear vehicle body angular acceleration may also be detected using a 6-axis MEMS sensor or the like.

The front vehicle body sensor unit 307 detects a front vehicle body speed and a front vehicle body angular speed, and supplies detection signals to the measurement unit 350. However, for example, a front vehicle body acceleration and a front vehicle body angular acceleration may also be detected using a 6-axis MEMS sensor or the like.

The handle sensor unit 308 detects the handle angle and the handle angular speed, and supplies detection signals to the measurement unit 350. However, for example, a handle acceleration and a handle angular acceleration may also be detected using a 6-axis MEMS sensor or the like.

The power steering unit 312 detects, by the steering torque sensor 309, a steering torque applied to a periphery of the steering shaft, for example, the handle torque or a steering torque related to the steering shaft, and supplies a detection signal to the measurement unit 350. As the steering torque sensor 309, for example, a torsion bar sensor can be used.

The steering torque actuator 310 in the power steering unit 312 may include, for example, a torsion bar actuator or a magnetostrictive actuator.

The steering torque actuator 310 is operated by a steering torque actuator control signal DCT generated and output by a steering torque actuator control signal generation unit 408, which will be described later, provided in the ECU 400, and applies a torque necessary for preventing fall-over of the two-wheeler, that is, a moment for preventing fall-over, to the handle, the steering shaft, or the like.

The front suspension sensor unit 311 detects the front suspension extension speed and supplies a detection signal to the measurement unit 350.

The front tire sensor unit 313 detects a front tire speed and a front tire angular speed, and supplies detection signals to the measurement unit 350. However, a front tire acceleration and a front tire angular acceleration may also be detected using a 6-axis MEMS sensor or the like.

For example, the measurement unit 350 amplifies the various received detection signals, then performs A/D conversion, samples, and supplies an obtained digital signal to the ECU 400.

In Fig. 12, in the measurement unit 350, output corresponding to the input of the various detection signals excluding the steering torque detection signal is denoted by y(t), and output corresponding to the input of the steering torque detection signal is denoted by s(t).

y(t) is "various sensor signal values" that fluctuate with time, and s(t) is a "steering torque value" in the periphery of the steering shaft of the two-wheeler that fluctuates with time.

The ECU 400 includes a microcomputer 402 and a power steering control unit 403 provided in the microcomputer 402. The microcomputer 402 functions as a two-wheeler stable travel control device.

The power steering control unit 403 includes an error detection unit 406, which includes a comparison unit 407, and the steering torque actuator control signal generation unit 408.

Here, the comparison unit 407 in the error detection unit 406 compares the steering torque value S(t) sent from the measurement unit 350 with a target value sd of the negative feedback control, and outputs a difference therebetween as an error e(t). The error e(t) can be expressed as sd - s(t).

The steering torque actuator control signal generation unit 408 includes a generalized speed calculation unit 410 and a steering torque actuator control signal calculation unit 412.

As indicated by A-2 in Fig. 6, the generalized speed GEN is defined by a function including a plurality of speed components of the two-wheeler vehicle, which are related to the moving direction. The generalized speed calculation unit 410 calculates a current generalized speed of the vehicle based on the various sensor signal values y(t) sent from the measurement unit 350.

When the current generalized speed is calculated, a coefficient k corresponding to the optimum feedback gain corresponding to the calculated generalized speed is uniquely determined. That is, as described above, the non-linear equation of motion indicating the behavior of the vehicle is linearized under the condition that the generalized speed is constant without varying in a very short time. That is, the feedback gain at the generalized speed is determined by linearly approximating a quadratic function to obtain a linear equation, converting the linear equation into the state equation, and solving the state equation to obtain an eigenvalue. The coefficient corresponding to the feedback gain is the coefficient k shown in Fig. 12.

When the coefficient k is determined, the steering torque actuator control signal calculation unit 412 obtains a control input u(t) as the steering torque actuator control signal by multiplying the error e(t) (= (sd - s(t)) by the coefficient k. The control input u(t) is a control input capable of causing the two-wheeler stable travel control system 190 to function as the negative feedback control system and quickly converging, within a predetermined time, a fluctuation generated in the steering torque which is the input in the system 190.

The control input u(t) is applied to the steering torque actuator 310 in the power steering unit 312, and thus the negative feedback control is performed, and the stable travel of the two-wheeler is achieved.

### <Embodiment 2>

Next, reference is made to Fig. 13. Fig. 13 is a diagram showing another example of the configuration of the stable travel control system of the two-wheeler using an actual two-wheeler. In Fig. 13, the same components as those in Fig. 12 are denoted by the same reference numerals.

In the example of Fig. 13, a damping force is variably controlled in at least one of the front suspension 106f in a front tire FT of the two-wheeler and the rear suspension 106r in the rear tire RT.

In other words, for example, electronic variable damping force control is performed in at least one of the damper of front suspension 106f and the damper of rear suspension 106r.

At this time, in the damper in which the damping force is variably controlled, control is performed in which update of a damping force value and measurement of an extension speed of the suspension are synchronized such that the damping force value is updated when the spring in the suspension is fully compressed, and regarding measurement of the extension speed of the suspension, the suspension extension speed is measured in synchronization with the update of the damping force value.

As a mode in which the damping force of the damper in the suspension is variably controlled, a mode in which the damping force value is set to be lower than normal, a mode in which the damping force value is set to be higher than normal conversely, or a mode in which step-specific variable damping force control of switching the generated damping force value between a compression step and an extension step of the spring is performed can be considered.

In any of the modes, damping characteristics of the suspension change as the damping force value is updated, and the change in the damping characteristics is highly likely to affect the entire behavior of the two-wheeler vehicle.

Therefore, it is preferable to accurately measure the suspension extension speed in synchronization with the update of the damping characteristics of the suspension and accurately reflect a change in the suspension extension speed caused by the update of the damping force characteristics in the stable travel control of the two-wheeler. Accordingly, accuracy of the stable travel control of the two-wheeler can be further improved.

From such a viewpoint, in the example of Fig. 13, a notification signal TM for a damping force value update timing is supplied from each of the rear suspension sensor unit 303 and the front suspension sensor unit 311 to the measurement unit 350. Other configurations are the same as those of the example in Fig. 12.

In the example of Fig. 13, the measurement unit 350 synchronizes, for example, an A/D conversion-based sampling period of at least one of the rear suspension extension speed and the front suspension extension speed, in other words, a start timing of a measurable period of the suspension extension speed with the damping force value update timing. Accordingly, the suspension extension speed corresponding to the change in the damping force characteristics caused by the update of the damping force value of the damper can be accurately measured and observed.

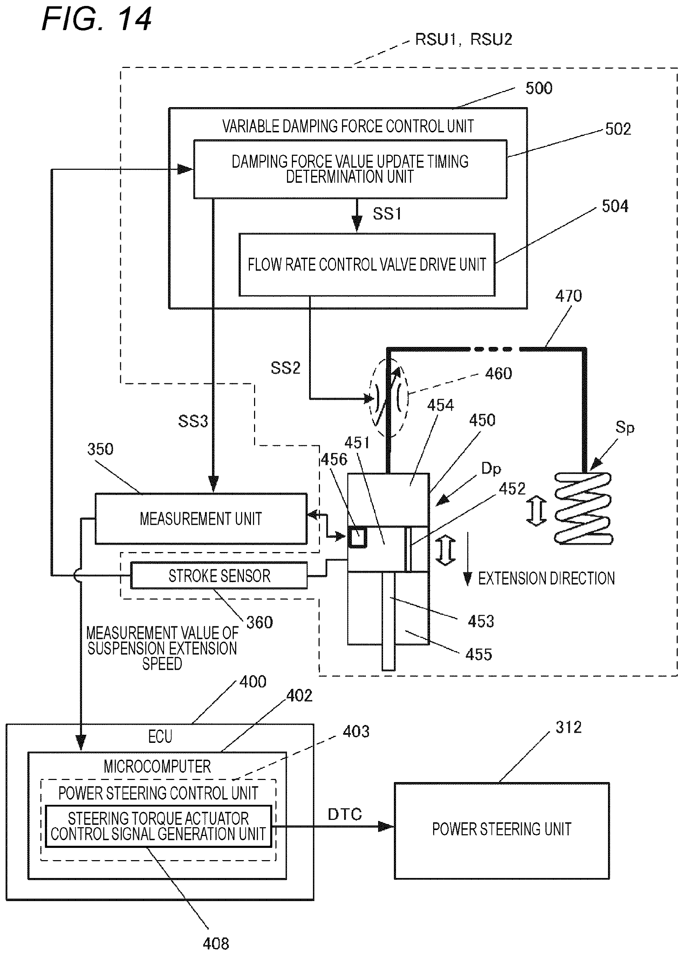

Hereinafter, the above-described synchronization control will be specifically described. Reference is made to Fig. 14. Fig. 14 is a diagram showing an example of the configuration in which the update of the damping force value in the damper and the measurement of the extension speed of the suspension are synchronized. In Fig. 14, the same parts as those in the foregoing drawings are denoted by the same reference numerals.

Fig. 14 shows a configuration example in which the synchronous control is implemented in the rear suspension. The following description is also applicable to the front suspension.

As shown in A-2 of Fig. 2 described above, the rear suspension includes the pair of rear suspensions RSU1, RSU2, the rear suspensions RSU1, RSU2 have the same damping force characteristics, and the electronic variable damping force control is performed on both the rear suspensions.

The pair of rear suspensions RSU1, RSU2 each includes a spring, in other words, the suspension spring Sp, and the damper Dp.

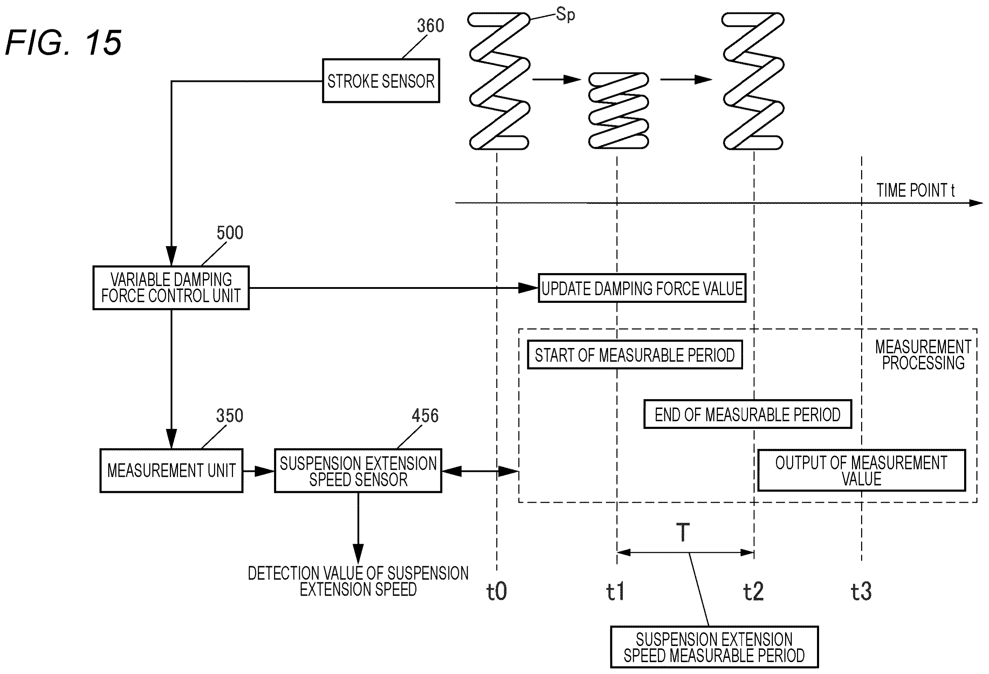

In the model of the two-wheeler in A-1 of Fig. 4 described above, the damper is denoted by the reference numeral 108r, and the spring is denoted by the reference numeral 110r, which are convenient reference numerals given to describe characteristics of the modeled rear tire. In A-2 of Fig. 2 described above, since the rear suspension is described in a form closer to an actual one, the reference numerals in A-2 of Fig. 2 are used here, the spring is denoted by the reference numeral Sp, and the damper is denoted by the reference numeral Dp. This point also applies to Fig. 15.

The damper Dp includes a cylinder 450 in which hydraulic oil as a working fluid is sealed, a movable piston 451 provided in the cylinder 450, a piston rod 453, and a stroke sensor 360.

The cylinder 450 is divided into a first oil chamber 454 and a second oil chamber 455 by the piston 451. The piston 451 is provided with an orifice 452.

A suspension extension speed sensor 456 capable of detecting a moving speed of the piston, in other words, the suspension extension speed is attached to the piston 451. The sensor 456 is a constituent element of the rear suspension sensor unit 303 described above.

Further, the stroke sensor 360 can measure a moving direction and a moving amount of the piston 451. When the piston 451 moves toward the second oil chamber 455, the moving direction is referred to as an extension direction of the suspension, and an opposite direction is referred to as a compression direction of the suspension.

Between the cylinder 450 and the spring Sp, a flow path 470 through which the hydraulic oil as the working fluid flows is provided, and an electronic-control type flow rate control valve 460 is provided in the flow path 470.

In order to variably control the damping force by controlling a flow rate of the hydraulic oil in the flow rate control valve 460, a variable damping force control unit 500 is provided.

The variable damping force control unit 500 includes a damping force value update timing determination unit 502 and a flow rate control valve drive unit 504.

The damping force value update timing determination unit 502 detects a timing at which the spring Sp is fully compressed based on a detection signal of the stroke sensor 360. In other words, a timing at which the spring Sp changes from a compressed state to an extended state is detected.

The damping force value update timing determination unit 502 notifies the flow rate control valve drive unit 504 of information SS1 on the damping force update value at the detected timing, and the flow rate control valve drive unit 504 outputs a control signal SS2 at the timing of receiving the notification, and controls the flow rate control valve 460 to change the damping force value.

A reason why the damping force value is updated at the timing when the spring Sp is fully compressed is that even if the damping force value is updated while the spring Sp is being compressed and moved or while the spring Sp is being extended, accurate switching of the damping force value is not achieved. Therefore, the damping force value is updated in synchronization with a time point when the spring Sp is fully compressed.

On the other hand, the measurement unit 350 is supplied with a detection signal from the suspension extension speed sensor 456, and is supplied with a signal SS3 indicating the update timing of the damping force value from the damping force value update timing determination unit 502.

The measurement unit 350 has an A/D converter therein as described above, and measures the suspension extension speed by sampling the detection signal of the suspension extension speed supplied from the suspension extension speed sensor 456. However, the measurement method is an example, and is not limited thereto, and for example, a measurement method of directly controlling the suspension extension speed sensor 456 and allowing the suspension extension speed sensor 456 to perform the detection at the measurement timing may be used.

The measurement is performed within the measurable period of the suspension extension speed. This point will be described later with reference to Fig. 15. In the present example, the start timing of the measurable period is synchronized with the update timing of the damping force value.

This is because when the damping force value is updated while the suspension extension speed is being measured, the suspension extension speed reflecting the update of the damping force cannot be accurately measured.

By synchronizing the update of the damping force value with the measurement of the suspension extension speed, the suspension extension speed reflecting the update of the damping force can be accurately measured.

The measurement unit 350 supplies the detection signal of the suspension extension speed to the microcomputer 402 in the ECU 400.

As described above, the microcomputer 402 as the two-wheeler stable travel control device is provided with the power steering control unit 403, and the power steering control unit 403 is provided with the steering torque actuator control signal generation unit 408.

The steering torque actuator control signal generation unit 408 generates, based on the accurate detection signal of the suspension extension speed, the steering torque actuator control signal DTC by performing processing necessary for the power steering control such as the calculation of the generalized speed, and supplies the steering torque actuator control signal DTC to the steering torque actuator 310 of the power steering unit 312. Accordingly, the power steering control with high accuracy is achieved in consideration of the update of the damping force value of the suspension.

Next, reference is made to Fig. 15. Fig. 15 is a diagram showing an example of a process of synchronizing the update of the damping force value in the damper and the measurement of the extension speed of the suspension. In Fig. 15, the same components as those in Fig. 14 are denoted by the same reference numerals. Since the operation of each unit is described in Fig. 14, the description of the operation of each unit will be omitted.

In Fig. 15, the spring Sp is in a fully extended state at a time point t0, and the compression of the spring Sp starts at the time point t0. At a time point t1, the spring Sp is in a fully compressed state, and at the timing, the measurable period of the suspension extension speed is started. At a time point t2, the spring Sp returns to the fully extended state.

A period T from the time point t1 to the time point t2 is the suspension extension speed measurable period. The measurement unit 350 can measure the suspension extension speed in at least a part of the suspension extension speed measurable period T or at a predetermined time point within the period T. In this way, the update of the damping force value in the damper and the measurement of the extension speed of the suspension can be synchronized.

At a time point t3, the measurement unit 350 outputs a measurement value of the extension speed of the suspension, in other words, the detection signal of the extension speed of the suspension.

As described above, an aspect of the present invention is a method of modeling a two-wheeler stable travel control system including: a first step (S1) of acquiring a vehicle model obtained by modeling a two-wheeler into a model having a center of gravity (2f) of a front vehicle body, a center of gravity (2r) of a rear vehicle body, a center of gravity (1f) of a front tire (FT) including a front tire main body (104f) and a front suspension (106f), and a center of gravity (1r) of a rear tire (RT) including a rear tire main body (104r) and a rear suspension (106r); a second step (S2, S3) of creating a linear equation of motion for the vehicle model (MDL) on a condition that an action term indicating a sum of acting forces acting on the respective centers of gravity and an inertia term indicating a sum of inertial forces acting on the respective centers of gravity are balanced; and a third step (S4) of converting the linear equation of motion into a state equation; a fourth step (S5, S6) of acquiring, by analysis based on a root trajectory of the state equation, a feedback gain allowing stable travel of the vehicle model at a speed within a predetermined speed range; and a fifth step (S7) of creating a model (180) of the two-wheeler stable travel control system that performs negative feedback control using the feedback gain obtained in the fourth step.

Accordingly, the two-wheeler can be modeled as a multi-body model, and an appropriate gain of the negative feedback control system can be obtained for any speed within a desired speed range by root trajectory analysis based on modern control theory.

Therefore, for example, scientific and objective analysis and evaluation can be performed on stable travel control of the two-wheeler.

Further, for example, a two-wheeler that travels autonomously and stably can be efficiently designed using a model based development method.

In a second aspect according to the first aspect, the model (180) of the two-wheeler stable travel control system created in the fifth step may include a model (MOD1) of a two-wheeler system corresponding to the two-wheeler that is a control target, a model (MOD2) of an input system for inputting an input variable to the model of the two-wheeler system, a model (MOD3) of an output system for outputting an output variable from the model of the two-wheeler system, and a model (MOD4) of a feedback system for changing a value of the input variable in the model of the input system by feedback performed using the feedback gain, which is acquired in the fourth step, and based on the output variable.

According to the second aspect, since the two-wheeler stable travel control system is divided into a plurality of models, in the model based development, the two-wheeler stable travel control system can be easily designed by replacing each model with an actual portion.

In a third aspect according to the first or second aspect, when creating the model (180) of the two-wheeler stable travel control system, the vehicle model (MDL) may be set as a control target, an input of the vehicle model may include at least a steering torque in the vehicle model, an output of the vehicle model may include at least a speed of the vehicle model, an angular speed of the vehicle model, a handle angular speed of a handle provided in the vehicle model, and a suspension extension speed in each of the front suspension and the rear suspension, and
the steering torque as the input of the vehicle model may be controlled by performing negative feedback control using the feedback gain, which is acquired in the fourth step, and based on the output of the vehicle model.

According to the third aspect, the steering torque acting on the hand or a steering shaft of the two-wheeler can be appropriately generated in sufficient consideration of characteristics of the suspensions and the like, and the travel of the two-wheeler can be stabilized using the power steering technique.

In a fourth aspect according to any one of the first to third aspects, in the second step, when creating the linear equation of motion for the vehicle model, a condition may be applied that an engine or a motor (319) provided in an actual two-wheeler corresponding to the vehicle model is subjected to constant torque control such that a torque is constant even when a rotation speed fluctuates.

According to the fourth aspect, by the constant torque control, a moment or the like generated in a vehicle body can be reduced in response to a change in the rotation speed of the engine or the motor of the two-wheeler, and thus, accuracy of analysis for stable travel controllability of the two-wheeler is improved.

In a fifth aspect according to any one of the first to fourth aspects, in the second step, when creating the linear equation of motion for the vehicle model, a generalized speed of the vehicle model may be defined by a function including, as variables, a first speed component generated in a moving direction of the vehicle model due to translational motion without rotation of the vehicle model and a second speed component generated in the moving direction of the vehicle model due to rotation motion of the vehicle model, a linearized action term and a linearized inertia term may be calculated by multiplying a non-linear action term and a non-linear inertia term included in the non-linear equation of motion by a Jacobian matrix at the generalized speed, and the linear equation of motion may be created on a condition that the linearized action term and the linearized inertia term are balanced.

In the fifth aspect, since the averaged speed is defined by comprehensively considering the speed component caused by the translational motion and the speed component caused by the rotation motion, which occur in the moving direction of the vehicle model, a complicated behavior of the two-wheeler can be accurately analyzed in consideration of the vibration or the like caused by the rotation. When linearizing the equation of motion, since a linearizing process is performed under a condition that the averaged speed is constant, information missing due to the linearization, that is, first-order approximation can be minimized, and a decrease in the analysis accuracy can be prevented.

In a sixth aspect according to any one of the first to fifth aspects, in a case where a damper (Dp) provided in at least one of the front suspension and the rear suspension is one whose damping force is variably controlled, and the suspension (RSU1, RSU2, FR1, FR2) including the damper whose damping force is variably controlled as a constituent element is a variable damping force suspension, when observing a suspension extension speed of the variable damping force suspension, a damping force value may be updated when a spring (Sp) which is a constituent element of the variable damping force suspension is fully compressed, and the suspension extension speed may be observed in synchronization with the update of the damping force value.

According to the sixth aspect, in the observation of the suspension extension speed, when the suspension is the variable damping force suspension, the damping force value is updated when the spring included in the variable damping force suspension is fully compressed, and the suspension extension speed is observed in synchronization with the update, and thus an accurate suspension extension speed corresponding to the updated damping force value can be observed.

When the technique of the present aspect is used, for a two-wheeler including an electronic-control type suspension that performs variable damping force control, a change in the damping force value can be accurately reflected, and a complicated behavior of the two-wheeler can be more accurately observed, analyzed, and evaluated.

Further, a steering torque for the power steering that is necessary for autonomous stable travel control of the two-wheeler can be accurately generated.

Therefore, the autonomous stable travel controllability and the like of a wide variety of two-wheelers can be evaluated and analyzed. Further, versatility of the model based development can be significantly improved. Further, accuracy of the power steering technique in the two-wheeler can be improved.

In a seventh aspect, a two-wheeler stable travel simulator (40) includes: a signal processing device (44) configured to perform signal processing for acquiring the feedback gain in the fourth step in the method of modeling the two-wheeler stable travel control system according to the first aspect; an input interface (42) configured to input a design parameter of the vehicle model and a travel condition parameter of the vehicle model to the signal processing device; and an output interface (46) configured to output information on a behavior of the vehicle model in response to the parameters input from the input interface.

According to the seventh aspect, it is possible to perform detailed analysis and evaluation on an appropriate feedback gain for a two-wheeler exhibiting a complicated behavior, which cannot be chemically verified in the conventional art. Therefore, a design of the two-wheeler having an autonomous driving function can be sped up.

In an eighth aspect, a program causes a computer to operate as the two-wheeler stable travel simulator according to the seventh aspect.

According to the eighth aspect, the simulator can be constructed by the program, and the implementation is facilitated.

In a ninth aspect, a two-wheeler stable travel control system (190) includes: an actual two-wheeler (300); a power steering unit (312) attached to the actual two-wheeler and including, as a constituent element, a steering torque actuator (310) configured to generate a steering torque in the two-wheeler; a measurement unit (350) configured to perform measurement processing based on outputs of a plurality of sensor units (301, 303, 305, 307, 308, 311, 313) attached to the actual two-wheeler; and a power steering control unit (403) attached to the two-wheeler and including a steering torque actuator control signal generation unit (408) configured to generate a control signal for the steering torque actuator based on an output of the measurement unit.

According to the ninth aspect, it is possible to implement a high-performance two-wheeler stable travel control system for an actual two-wheeler by using the model based development method.

In a tenth aspect according to the ninth aspect, the measurement unit (350) may measure a rear tire speed, a rear tire angular speed, a rear vehicle body speed, a rear vehicle body angular speed, a front tire speed, a front tire angular speed, a front vehicle body speed, and a front vehicle body angular speed of the actual two-wheeler, that is, a two-wheeler main body (300), a handle angular speed of a handle in the actual two-wheeler, an extension speed of a front suspension in the actual two-wheeler, and a suspension extension speed of a rear suspension in the actual two-wheeler.

According to the ninth aspect, the steering torque acting on the hand or the steering shaft of the two-wheeler can be appropriately generated in sufficient consideration of the characteristics of the suspensions and the like, and the travel of the two-wheeler can be stabilized using the power steering technique.

In an eleventh aspect according to the ninth or tenth aspect, each of the front suspension (FR1, FR2) and the rear suspension (RSU1, RSU2) provided in the actual two-wheeler, that is, the two-wheeler main body (300) may include a spring (Sp) and a damper (Dp), at least one of the front suspension and the rear suspension may further include a variable damping force control unit (500) that variably controls a damping force of the damper, and in a case where the suspension including the damper whose damping force is variably controlled as a constituent element is a variable damping force suspension, the variable damping force control unit (500) may update a damping force value when the spring (Sp) which is the constituent element of the variable damping force suspension is fully compressed, and the measurement unit (350), when measuring a suspension extension speed of the variable damping force suspension, may measure the suspension extension speed in synchronization with the update of the damping force value in the variable damping force control unit (500).

According to the eleventh aspect, in the measurement of the suspension extension speed, when the suspension is the variable damping force suspension, the damping force value is updated when the spring included in the variable damping force suspension is fully compressed, and the suspension extension speed is measured in synchronization with the update, and thus an accurate suspension extension speed corresponding to the updated damping force value can be measured.

When the technique of the present aspect is used, for a two-wheeler including an electronic-control type suspension that performs the variable damping force control, the change in the damping force value can be accurately reflected, and the complicated behavior of the two-wheeler can be more accurately observed, analyzed, and evaluated.

Further, the steering torque for the power steering that is necessary for the autonomous stable travel control of the two-wheeler can be accurately generated.

Therefore, the autonomous stable travel controllability and the like of a wide variety of two-wheelers can be evaluated and analyzed. Further, the versatility of the model based development can be significantly improved. Further, the accuracy of the power steering technique in the two-wheeler can be improved.

In a twelfth aspect according to any one of the ninth to eleventh aspects, the actual two-wheeler may include a constant torque control unit (317) configured to perform constant torque control on an engine or a motor (319), that is provided in a vehicle as the moving actual two-wheeler, such that a torque is constant with respect to a rotation speed, and the constant torque control may be performed by the constant torque control unit (317) when the two-wheeler stable travel control system is operating.

According to the twelfth aspect, by the constant torque control, the moment or the like generated in the vehicle body can be reduced in response to the change in the rotation speed of the engine or the motor of the two-wheeler, and thus, the accuracy of analysis for the stable travel controllability of the two-wheeler is improved.

In a thirteenth aspect, a two-wheeler stable travel control device (402) functions as the power steering control unit (403) in the two-wheeler stable travel control system according to any one of the ninth to twelfth aspects.

According to the thirteenth aspect, it is possible to implement a two-wheeler stable travel control device, that is, a microcomputer, a signal processing circuit, or the like, which is a device necessary for performing high-accuracy stable travel control of the two-wheeler.

In a fourteenth aspect according to the thirteenth aspect, the two-wheeler stable travel control device may include:
an error detection unit (406) configured to detect an error between the steering torque and a target value based on the output of the measurement unit (350); and
the steering torque control signal generation unit (408) configured to generate the steering torque actuator control signal (DTC) to prevent the error of the detected steering torque.

According to the fourteenth aspect, it is possible to implement a two-wheeler stable travel control device, that is, a microcomputer, a signal processing circuit, or the like necessary for constructing a negative feedback control system capable of quickly converging, within a desired time, the error generated in the steering torque of the two-wheeler.

In the above description, the motorcycle has been described as an example, but the present invention is also applicable to a three-wheeler, a four-wheeler, and the like, is also applicable to an electric two-wheeler or the like that is currently being developed, and a type of the vehicle is not limited.

As described above, according to the present invention, it is possible to provide, for a two-wheeler with a non-linear complicated behavior, a versatility two-wheeler stable travel control technique and the like capable of multilaterally and scientifically verifying travel stability of the two-wheeler, in other words, a method of modeling a two-wheeler stable travel control system, a two-wheeler stable travel simulator, a program, the two-wheeler stable travel control system, a two-wheeler stable travel control device, and the like.

The present invention is not limited to the examples as long as the operations and effects of the invention are exhibited.

### INDUSTRIAL APPLICABILITY

The present invention is useful as a method of modeling two-wheeler stable travel control system, a two-wheeler stable travel simulator, a program, a two-wheeler stable travel control system, a two-wheeler stable travel control device, and the like.

### REFERENCE SIGNS LIST

1f, 2f, 1r, 2r: center of gravity
4: road surface
10: computer system
12: computer main body
14: monitor
15: vehicle body
16: keyboard
17: front wheel
18: mouse
19: rear wheel
20: first folder
21, 23, 26, 28: folder
22: state equation corresponding to two-wheeler stable travel control system
24: data for state equation
25: second folder
27: model as specifications of two-wheeler stable travel control system
28: folder
30: storage device
32: analysis simulation program (program) of two-wheeler stable travel control system
40: simulator (two-wheeler stable travel simulator)
44: signal processing device for feedback gain analysis based on state equation
42: input interface
46: output interface
100: front vehicle body
102: rear vehicle body
104f, 104r: tire main body
105f: spring representing elastic characteristic of front tire main body
105r: spring representing elastic characteristic of rear tire main body
106f: one virtual front suspension (front suspension)
106r: one virtual rear suspension (rear suspension)
108f: front damper
108r: rear damper
110f, 110r: spring (suspension spring)
120: steering shaft
121: handle
122: rear vehicle body shaft
180: model of two-wheeler stable travel system
190: two-wheeler stable travel control system
300: two-wheeler main body
301: rear tire sensor unit
303: rear suspension sensor unit
305: rear vehicle body sensor unit
307: front vehicle body sensor unit
308: handle sensor unit
309: steering torque sensor
310: steering torque actuator
311: front suspension sensor unit
312: power steering unit
313: front tire sensor unit
315: engine control unit
317: constant torque control unit
319: engine or electric motor
350: measurement unit
360: stroke sensor
400: ECU
402: microcomputer (two-wheeler stable travel control)
403: power steering control unit
406: error detection unit
407: comparison unit
408: steering torque actuator control signal generation unit
410: generalized speed calculation unit
412: steering torque actuator control signal calculation unit
450: cylinder
451: piston
452: orifice
454: first oil chamber
455: second oil chamber
456: suspension extension speed sensor
460: flow rate control valve
500: variable damping force control unit
502: damping force value update timing determination unit
504: flow rate control valve drive unit
Dp: damper
FR1, FR2: front suspension having function as damper
FT: front tire
FU: point on upper portion of front suspension
Lf, Lr: lateral force
m1f, m2f, m1r, m2r: mass of center of gravity
MDL: vehicle model
MOD1: model of two-wheeler system
MOD2: model of input system
MOD3: model of output system
MOD4: model of feedback system
RSU1, RSU2: rear suspension
RT: rear tire
RU: point on upper portion of rear suspension
Sp: spring
T: suspension extension speed measurable period
TM: notification signal of damping force value update timing
θcas: caster angle
θhd: handle angle

## Claims

1. A method of modeling a two-wheeler stable travel control system, comprising:
a first step of acquiring a vehicle model obtained by modeling a two-wheeler into a model having a center of gravity of a front vehicle body, a center of gravity of a rear vehicle body, a center of gravity of a front tire including a front tire main body and a front suspension, and a center of gravity of a rear tire including a rear tire main body and a rear suspension;
a second step of creating a linear equation of motion for the vehicle model on a condition that an action term indicating a sum of acting forces acting on the respective centers of gravity and an inertia term indicating a sum of inertial forces acting on the respective centers of gravity are balanced;
a third step of converting the linear equation of motion into a state equation;
a fourth step of acquiring, by analysis based on a root trajectory of the state equation, a feedback gain allowing stable travel of the vehicle model at a speed within a predetermined speed range; and
a fifth step of creating a model of the two-wheeler stable travel control system that performs negative feedback control using the feedback gain obtained in the fourth step.

2. The method of modeling the two-wheeler stable travel control system according to claim 1, wherein
the model of the two-wheeler stable travel control system created in the fifth step includes:
a model of a two-wheeler system corresponding to the two-wheeler that is a control target,
a model of an input system for inputting an input variable to the model of the two-wheeler system,
a model of an output system for outputting an output variable from the model of the two-wheeler system, and
a model of a feedback system for changing a value of the input variable in the model of the input system by feedback performed using the feedback gain, which is acquired in the fourth step, and based on the output variable.

3. The method of modeling the two-wheeler stable travel control system according to claim 1, wherein
when creating the model of the two-wheeler stable travel control system,
the vehicle model is set as a control target,
an input of the vehicle model includes at least a steering torque in the vehicle model,
an output of the vehicle model includes at least a speed of the vehicle model, an angular speed of the vehicle model, a handle angular speed of a handle provided in the vehicle model, and a suspension extension speed in each of the front suspension and the rear suspension, and
the steering torque as the input of the vehicle model is controlled by performing negative feedback control using the feedback gain, which is acquired in the fourth step, and based on the output of the vehicle model.

4. The method of modeling the two-wheeler stable travel control system according to claim 1, wherein
in the second step,
when creating the linear equation of motion for the vehicle model,
a condition is applied that an engine or a motor provided in an actual two-wheeler corresponding to the vehicle model is subjected to constant torque control such that a torque is constant even when a rotation speed fluctuates.

5. The method of modeling the two-wheeler stable travel control system according to claim 1, wherein
in the second step,
when creating the linear equation of motion for the vehicle model,
a generalized speed of the vehicle model is defined by a function including, as variables, a first speed component generated in a moving direction of the vehicle model due to translational motion without rotation of the vehicle model and a second speed component generated in the moving direction of the vehicle model due to rotation motion of the vehicle model,
a linearized action term and a linearized inertia term are calculated by multiplying a non-linear action term and a non-linear inertia term included in the non-linear equation of motion by a Jacobian matrix at the generalized speed, and
the linear equation of motion is created on a condition that the linearized action term and the linearized inertia term are balanced.

6. The method of modeling the two-wheeler stable travel control system according to claim 1, wherein
in a case where a damper provided in at least one of the front suspension and the rear suspension is one whose damping force is variably controlled, and the suspension including the damper whose damping force is variably controlled as a constituent element is a variable damping force suspension,
when observing a suspension extension speed of the variable damping force suspension,
a damping force value is updated when a spring which is a constituent element of the variable damping force suspension is fully compressed, and the suspension extension speed is observed in synchronization with the update of the damping force value.

7. A two-wheeler stable travel simulator comprising:
a signal processing device configured to perform signal processing for acquiring the feedback gain in the fourth step in the method of modeling the two-wheeler stable travel control system according to claim 1;
an input interface configured to input a design parameter of the vehicle model and a travel condition parameter of the vehicle model to the signal processing device; and
an output interface configured to output information on a behavior of the vehicle model in response to the parameters input from the input interface.

8. A program causing a computer to operate as the two-wheeler stable travel simulator according to claim 7.

9. A two-wheeler stable travel control system comprising:
an actual two-wheeler;
a power steering unit attached to the actual two-wheeler and including, as a constituent element, a steering torque actuator configured to generate a steering torque in the actual two-wheeler;
a measurement unit configured to perform measurement processing based on outputs of a plurality of sensor units attached to the actual two-wheeler; and
a power steering control unit attached to the two-wheeler and including a steering torque actuator control signal generation unit configured to generate a control signal for the steering torque actuator based on an output of the measurement unit.

10. The two-wheeler stable travel control system according to claim 9, wherein
the measurement unit measures a rear tire speed, a rear tire angular speed, a rear vehicle body speed, a rear vehicle body angular speed, a front tire speed, a front tire angular speed, a front vehicle body speed, and a front vehicle body angular speed of the actual two-wheeler, a handle angular speed of a handle in the actual two-wheeler, an extension speed of a front suspension in the actual two-wheeler, and a suspension extension speed of a rear suspension in the actual two-wheeler.

11. The two-wheeler stable travel control system according to claim 9, wherein
each of the front suspension and the rear suspension provided in the actual two-wheeler includes a spring and a damper,
at least one of the front suspension and the rear suspension further includes a variable damping force control unit that variably controls a damping force of the damper, and
in a case where the suspension including the damper whose damping force is variably controlled as a constituent element is a variable damping force suspension,
the variable damping force control unit updates a damping force value when the spring which is the constituent element of the variable damping force suspension is fully compressed, and
the measurement unit, when measuring a suspension extension speed of the variable damping force suspension, measures the suspension extension speed in synchronization with the update of the damping force value in the variable damping force control unit.

12. The two-wheeler stable travel control system according to claim 9, wherein
the actual two-wheeler includes a constant torque control unit configured to perform constant torque control on an engine or a motor, that is provided in a vehicle as the moving actual two-wheeler, such that a torque is constant with respect to a rotation speed, and
the constant torque control is performed by the constant torque control unit when the two-wheeler stable travel control system is operating.

13. A two-wheeler stable travel control device functioning as the power steering control unit in the two-wheeler stable travel control system according to any one of claims 9 to 12.

14. The two-wheeler stable travel control device according to claim 13, comprising:
an error detection unit configured to detect an error between the steering torque and a target value based on the output of the measurement unit; and
the steering torque control signal generation unit configured to generate the steering torque actuator control signal to prevent the error of the detected steering torque.
